(19) Europäisches Patentamt
European Patent Office
Office européen des brevets

(11) EP 4 436 019 A1

# (12) EUROPEAN PATENT APPLICATION

(43) Date of publication:
**25.09.2024 Bulletin 2024/39**

(21) Application number: **23162758.9**

(22) Date of filing: **18.03.2023**

(51) International Patent Classification (IPC):
***H02M 1/00*** *(2006.01)* ***H02M 1/10*** *(2006.01)*
***H02M 1/42*** *(2007.01)* ***H02M 3/158*** *(2006.01)*
***H02M 1/14*** *(2006.01)* ***H02M 1/15*** *(2006.01)*
*H02M 7/487* *(2007.01)*

(52) Cooperative Patent Classification (CPC):
**H02M 1/007; H02M 1/0054; H02M 1/0093; H02M 1/10; H02M 1/143; H02M 1/15; H02M 1/4216; H02M 1/4233; H02M 3/158;**
H02M 7/487

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Infineon Technologies Austria AG**
**9500 Villach (AT)**

(72) Inventors:
- **KOLAR, Johann Walter**
  **8044 Zürich (CH)**
- **KASPER, Matthias Joachim**
  **9500 Villach (AT)**
- **WEIHE, Sven Elgin**
  **8032 Zürich (CH)**
- **HUBER, Jonas Emanuel**
  **5000 Aarau (CH)**
- **DEBOY, Gerald**
  **9061 Klagenfurt (AT)**
- **MENZI-IMFELD, David**
  **3430 Burgdorf (CH)**
- **AZURZA ANDERSON, Jon**
  **9500 Villach (AT)**

(74) Representative: **Westphal, Mussgnug & Partner, Patentanwälte mbB**
**Werinherstraße 79**
**81541 München (DE)**

## (54) METHOD AND CONTROL CIRCUIT FOR OPERATING A POWER CONVERTER ARRANGEMENT

(57) A method for operating a power converter, a control circuit for operating a power converter, and an executable program code are disclosed. The method includes selecting from operating a power converter arrangement in a single-phase mode or a three-phase mode. The power converter arrangement includes a power converter (11) having three input nodes (a, b, c) each configured to receive a respective input voltage (Va, Vb, Vc), and an output (x, z), and a buffer circuit (12) connected to the output (x, z) of the power converter (11). Operating the power converter arrangement in the single phase mode includes receiving the same input voltage (Vabc) at each of the three input nodes (a, b, c) of the power converter (11), and operating the buffer circuit to regulate at least one output voltage of the buffer circuit (12) Operating the power converter arrangement in the three-phase mode includes operating the buffer circuit (12) to regulate at least one output voltage (Vxz; Vx, Vz) at the output (x, z) of the power converter (11) such that the power converter (11) is enabled to operate in a reduced switching mode, and operating the power converter (11) in the reduced switching mode.

11
12
Va
Vb
Vc
a
b
c
Vab
Vbc
Vca
Ia
Ib
Ic
POWER CONVER-TER
Ix
x
Vxz
z
BUFFER CIRCUIT
Iq
q
Vqr
r
Zo
n
13
CONTROLLER

FIG 1

EP 4 436 019 A1

## Description

This disclosure relates in general to a power converter arrangement with a power converter, in particular a PFC rectifier, and a buffer circuit.

One example relates to a method. The method includes operating a power converter arrangement in a single-phase mode or a three-phase mode. The power converter arrangement includes a power converter having three input nodes each configured to receive a respective input voltage, and an output. Furthermore, the power converter arrangement includes a buffer circuit connected to the output of the power converter. Operating the power converter arrangement in the single phase mode includes receiving the same input voltage at each of the three input nodes of the power converter, and operating the buffer circuit to regulate at least one output voltage of the buffer circuit. Operating the power converter arrangement in the three-phase mode includes operating the buffer circuit to regulate an output voltage at the output of the power converter such that the power converter is enabled to operate in a reduced switching mode, operating the power converter in the reduced switching mode.

Examples are explained below with reference to the drawings. The drawings serve to illustrate certain principles, so that only aspects necessary for understanding these principles are illustrated. The drawings are not to scale. In the drawings the same reference characters denote like features.

Figure 1 illustrates one example of a power converter arrangement that includes a power converter configured to receive three input voltages and a buffer circuit connected to an output of the power converter;

Figure 2 illustrates a power converter arrangement of the type illustrated in Figure 1 that further includes a further power converter connected to an output of the buffer circuit;

Figure 3 shows a signal diagram of an input voltage received by the power converter arrangement in a single-phase mode;

Figure 4 shows a signal diagram of an input power received by the power converter arrangement in the single-phase mode;

Figure 5 shows signal diagrams of input voltages received by the power converter arrangement in a three-phase mode;

Figure 6 illustrates a signal diagram of an input power received by the power converter arrangement in the three-phase mode;

Figure 7 illustrates one example of a method for operating the power converter arrangement in the single-phase mode or the three-phase mode;

Figure 8 illustrates one example of a control circuit (controller) of the power converter arrangement, wherein the control circuit includes a first, second, third, and fourth control unit;

Figure 9 illustrates a circuit diagram of one example of the buffer circuit;

Figures 10A-10C show signal diagrams that illustrate operation of the buffer circuit according to Figure 9 in the single-phase mode;

Figure 11 illustrate one example of a control unit configured to control operation of the buffer circuit according to Figure 9 in the single-phase mode;

Figures 12A-12B illustrate examples of a voltage controller and a current controller of the control unit according to Figure 11;

Figures 13A-13C show signal diagrams that illustrate operation of the buffer circuit according to Figure 9 in the three-phase mode;

Figure 14 illustrates one example of a control unit configured to control operation of the buffer circuit according to Figure 9 in the three-phase mode;

Figure 15 illustrates one example of a voltage controller of the control unit according to Figure 14;

Figure 16 illustrates a circuit diagram of another example of the buffer circuit;

Figures 17A-17C show signal diagrams that illustrate operation of the buffer circuit according to Figure 16 in the single-phase mode;

Figure 18 illustrates one example of a control unit configured to control operation of the buffer circuit according to Figure 16 in the single-phase mode;

Figures 19A-19B illustrate examples of a voltage controller and a current controller of the control unit according to Figure 18;

Figures 20A-20C show signal diagrams that illustrate operation of the buffer circuit according to Figure 16 in the three-phase mode;

Figure 21 illustrates one example of a control unit configured to control operation of the buffer circuit according to Figure 16 in the three-phase mode;

Figure 22 illustrates one examples of a voltage controller of the control unit according to Figure 21;

Figure 23 illustrates a buffer circuit according to another example;

Figure 24 schematically illustrates one example of the power converter;

Figure 25 illustrates one example of a power converter of the type illustrated in Figure 24 that includes a totem pole topology;

Figures 26A-26C show signal diagrams that illustrate operation of the power converter according to Figure 25 in the single-phase mode;

Figure 27 illustrates one example of a control unit configured to control operation of the power converter according to Figure 24 in the single-phase mode;

Figures 28A-28B illustrate examples of a voltage controller and a current controller included in the control unit according to Figure 27;

Figures 29A-29C show signal diagrams that illustrate operation of the power converter according to Figure 25 in the three-phase mode;

Figure 30 illustrates one example of a control unit configured to control operation of the power converter according to Figure 25 in the three-phase mode;

Figures 31A-31B illustrate examples of a voltage controller and a current controller included in the control unit according to Figure 30;

Figure 32 illustrates one example of a power converter of the type illustrated in Figure 24 that includes a Vienna rectifier topology;

Figures 33A-33C show signal diagrams that illustrate operation of the power converter according to Figure 32 in the single-phase mode;

Figures 34A-34C show signal diagrams that illustrate operation of the power converter according to Figure 31 in the three-phase mode;

Figure 35 illustrates one example of a voltage controller included in the control circuit of the power converter according to Figures 32;

Figure 36 illustrates one example of a buffer circuit configured to be connected to a power converter of the type illustrated in Figure 32 and operating in the single-phase mode;

Figures 37A-37D show signal diagrams that illustrate operation of the buffer circuit according to Figure 36 in the single-phase mode;

Figure 38 illustrates the buffer circuit according to Figure 36 operating in the three-phase mode;

Figures 39A-39D show signal diagrams that illustrate operation of the buffer circuit according to Figure 36 in the three-phase mode;

Figure 40 illustrates another example of a buffer circuit configured to be connected to a power converter of the type illustrated in Figure 32 and operating in the single-phase mode; and

Figure 41 illustrates the buffer circuit according to Figure 40 operating in the three-phase mode.

In the following detailed description, reference is made to the accompanying drawings. The drawings form a part of the description and for the purpose of illustration show examples of how the invention may be used and implemented. It is to be understood that the features of the various embodiments described herein may be combined with each other, unless specifically noted otherwise.

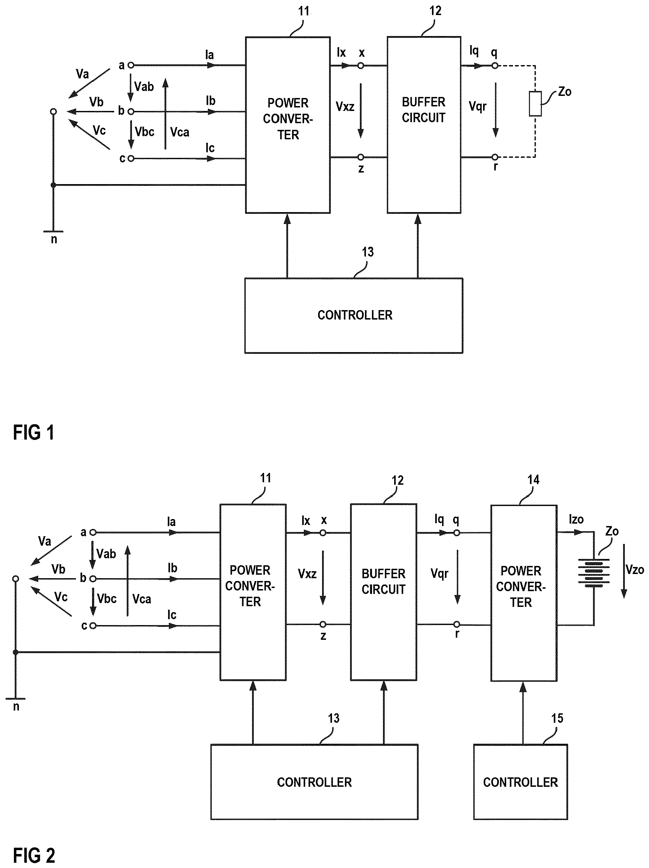

Figure 1 illustrates one example of a power converter arrangement. The power converter arrangement includes a power converter 11 and a buffer circuit 12. The power converter 11 includes three input nodes a, b, c and an output x, z. Each of the input nodes a, b, c is configured to receive a respective input voltage Va, Vb, Vc. The input voltages Va, Vb, Vc are referenced to a reference node n, for example. The buffer circuit 12 is connected to the output x, z of the power converter 11 and is configured to provide a buffer circuit output voltage Vqr at an output q, r of the buffer circuit 12. In the example illustrated in Figure 1, the output voltage Vqr of the buffer circuit 12 is the output voltage of the power converter arrangement. The output voltage Vqr of the power converter arrangement may be received by a load Zo (illustrated in dashed lines), for example.

Optionally, an input filter (not illustrated) is connected between the input nodes a, b, c and the power converter 11. As outlined below, the power converter 11 is a switched-mode power converter, so that input currents Ia, Ib, Ic received by the power converter 11 from the individual input nodes a, b, c may include current ripples. The input filter is configured to filter the input currents Ia, Ib, Ia so that the currents received from the input nodes a, b, c are essentially devoid of current ripples. An input filter of this type is commonly known, so that no further explanation is required in this regard input filter.

Furthermore, the power converter arrangement includes a control circuit (controller) 13 that is configured to control operation of the power converter arrangement. More specifically, the controller is configured to control operation of the power converter 11 and the buffer circuit 12.

According to another example illustrated in Figure 2, the power converter arrangement includes a further power converter 14 connected to the output q, r of the buffer circuit 12. The further power converter 14 is configured to receive the output voltage Vqr provided by the buffer circuit 12 and is configured to power a load Zo connected to an output of the further power converter 14 based on the output voltage Vqr and an output current Iq received from the buffer circuit 12. The load Zo is a battery, for example. The further power converter 14 may be configured to regulate at least one of a current Izo provided to the load Zo or a voltage Vzo across the load Zo.

According to one example, the further power converter 14 is an isolated power converter, which is a power converter that provides for a galvanic isolation between an input and an output of the further power converter number 14. The input of the further power converter 14 is connected to the output q, r of the buffer circuit 12, and the output of the further power converter 14 is connected to the load Zo. The galvanic isolation between the input and the out output may be implemented using a transformer or may be implemented using capacitors, for example.

As illustrated, the power converter arrangement may include a further controller 15 that is configured to control operation of the further power converter 14. The power converter 13 and the further power converter 15 may share the same resources, such as a microcontroller executing program code for controlling the power converter 11, the buffer circuit 12, and the further power converter 14.

The power converter 11 according to Figures 1 and 2 is configured to operate in a PFC (power factor correction) mode and, therefore, may also be referred to as PFC rectifier. In the PFC rectifier 11, the input currents Ia, Ia b, Ic received at the inputs a, b, c are regulated dependent on the input voltages Va, Vb, Vc in order to control the power factor. More specifically, the waveforms of the input currents Ia, Ib, Ic are regulated to have the same waveform as the input voltages Va, Vb, Vc. The input currents Ia, Ib, Ic can be regulated such that the waveform of each of the input currents Ia, Ib, Ic is in phase with the respective input voltage Va, Vb, Vc, or such that there is a phase shift between the input current Ia, Ib, Ic and the respective input voltage Va, Vb, Vc.

As outlined below, the input voltages Va, Vb, Vc are alternating input voltages, so that the input currents Ia, Ib, Ic are alternating input currents. An average input power received by the PFC rectifier 11 can be controlled by controlling amplitudes of the input currents Ia, Ib, Ic, which is also explained herein further below.

Due to the switched-mode operation of the PFC rectifier 11, the input currents Ia, Ib, Ic may include current ripples. However, unless specifically stated otherwise, input currents Ia, Ib, Ic as used herein denote average input currents. In this context, an "average input current" is an input current averaged over one or more drive cycles of the switched-mode operation of the PFC rectifier 11.

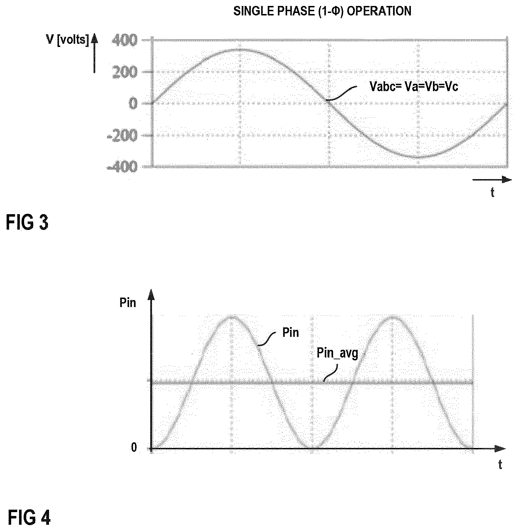

Operating the power converter arrangement includes selecting from operating the power converter arrangement in a single-phase mode or a three-phase mode. Referring to Figure 3, operating the power converter arrangement in the single-phase mode includes receiving the same input voltage Vabc at each of the three input nodes a, b, c, so that Vabc = Va = Vb = Vc. The input voltage Vabc is a sinusoidal input voltage with a frequency of 50 hertz (Hz) or 60 Hz, for example. An RMS (root mean square) value of the input voltage Vabc may range between 100 $V_{RMS}$ and 300 $V_{RMS}$ and is 230 $V_{RMS}$ or 110 $V_{RMS}$, for example. The amplitude of the input voltages Vabc is $\sqrt{2}$ times the RMS value.

Figure 3 illustrates a signal diagram of a sinusoidal input voltage Vabc during one period. Just for the purpose of illustration, the input voltage illustrated in Figure 3 is a sinusoidal voltage having an RMS value of 230$V_{RMS}$ and an amplitude of 325V. The input voltage Vabc is a single-phase voltage received from a power grid, for example.

Figure 4 illustrates the input power Pin and the average input power Pin_avg of the PFC rectifier operated in the single-phase mode. The input power Pin is given by

$$Pin = Vabc \cdot (Ia + Ib + Ic) \qquad (1),$$

where Vabc denotes the input voltage and Ia, Ib, Ic denote the input currents. Figure 4 illustrates the input power Pin over one period of the input voltage Vabc. For the purpose of illustration it is assumed that the power converter 11 operates in the PFC mode such that the input currents Ia, Ib, Ic each have the same waveform as the input voltage Vabc and are in phase with the input voltage Vabc, so that the input currents Ia, Ib, Ic are sinusoidal input currents in phase with the sinusoidal input voltage Vabc. In this case, as illustrated in Figure 4, the waveform of the input power Pin is a sine squared waveform having twice the frequency of the frequency of the input voltage Vabc.

A conventional power converter operating as a PFC rectifier includes an output capacitor connected to the output of the power converter. If, for example, the output capacitor is charged to reach a predefined voltage level at startup and a load draws a constant power from the power converter that equals the average input power Pin_avg the voltage across the output capacitor has a voltage ripple that is in accordance with the varying input power.

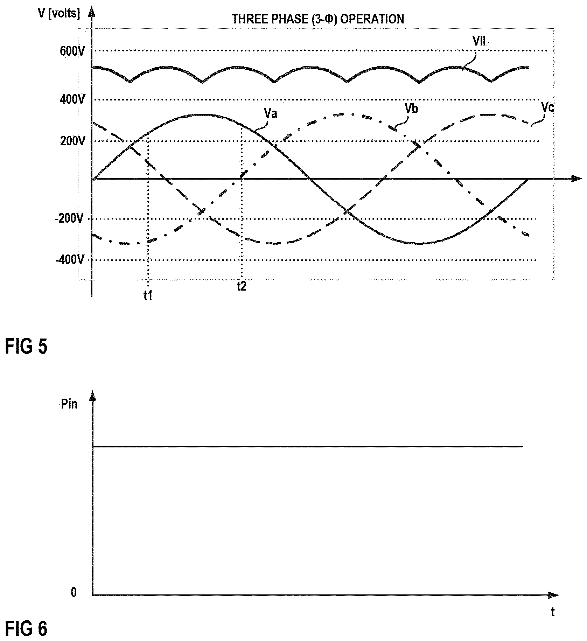

Referring to Figure 5, operating the power converter (PFC rectifier) 11 in the three-phase mode includes receiving different input voltages Va, Vb, Vc at the three input nodes a, b, c. According to one example, each of the three input voltages Va, Vb, Vc is a sinusoidal input voltage, wherein the input voltages Va, Vb, Vc have the same frequency and RMS value. The frequency is 50 Hz or 60 Hz, the RMS value is 230 $V_{RMS}$ or 110 $V_{RMS}$, for example. The input voltages Va, Vb, Vc are different by having different phase angles. According to one example, a phase shift between each pair of the input voltages Va, Vb, Vc is 120° ($2\pi/3$). Just for the purpose of illustration, the input voltages Va, Vb, Vc illustrated in Figure 5 are sinusoidal voltages with an RMS value of 230$V_{RMS}$ and an amplitude of 325V. The input voltages Va, Vb, Vc are voltages received from a three-phase power grid, for example.

Furthermore, operating the PFC rectifier 11 in the three-phase mode includes regulating the input current Ia, Ib, Ic received at each of the input nodes a, b, c such that the waveform of the respective input current Ia, Ib, Ic equals the waveform of the respective input voltage Va, Vb, Vc.

In the three-phase mode, each pair of the input voltage Va, Vb, Vc defines a line-to-line voltage, which is given by the difference of the two input voltages included in the respective pair. The line-to-line voltage is the voltage between each pair of the input nodes a, b, c illustrated in Figures 1 and 2, so that there are three line-to-line voltages Vab, Vbc, Vca (and three inverted line-to-line voltages Vba, Vcb, Vac). In a power converter arrangement that receives sinusoidal input voltages, the line-to-line voltages also have sinusoidal waveforms with the same frequency as the input voltages Va, Vb, Vc. In an input voltage system with 230$V_{RMS}$ sinusoidal input voltages Va, Vb, Vc, for example, the amplitude of the line-to-line voltages is 563V.

At each time during one period of the input voltages Va, Vb, Vc one of the three line-to-line voltages has the highest magnitude (absolute value). At time instance t1 illustrated in Figure 5, for example, the line-to-line voltage having the highest magnitude is line voltage Vab (=Va-Vb), and at time instance t2, for example, the line-to-line voltage having the highest magnitude is line voltage Vca (=Vc-Va). In the following, "highest line-to-line voltage" is the voltage that is given by the line-to-line voltage having the highest magnitude. The highest line-to-line voltage Vll is also illustrated in Figure 5. The highest line-to-line voltage, during one period of the input voltages Va, Vb, Vc includes six pulses, so that the waveform of the highest line-to-line voltage has a six-pulse shape and is a six-pulse waveform.

When operating the PFC rectifier 11 in the three-phase mode the input power Pin received by the PFC rectifier is essentially constant. This is illustrated in Figure 6, which illustrates the input power of the PFC rectifier 11 operated in the three-phase mode. Different from operating the PFC rectifier 11 in the single-phase mode, in the three-phase mode, the input power Pin does not decrease to zero. Voltage ripples that may occur in the input power Pin due to the six-pulse shape of the highest line-to-line voltage and a corresponding six-pulse shape of the overall input current, are not illustrated in Figure 6 and are much lower than in the single-phase mode. Thus voltage ripples that may occur at the output of a conventional PFC rectifier that is operated in the three-phase mode are much lower than in the single-phase mode.

Basically, in the three-phase mode, the PFC rectifier 11 can be operated in a normal operating mode or a reduced switching mode. The PFC rectifier 11 includes three rectifier branches (rectifier legs). The rectifier branches are not illustrated in Figures 1 and 2 and are explained in detail herein further below. Each of the rectifier branches is connected between a respective one of the input nodes a, b, c and the output nodes x, z.

In the normal operating mode, which may also be referred to as 3/3 mode, each of the rectifier branches operates in a switched mode, which includes operating the rectifier branches in a plurality of successive drive cycles. The latter may include that one or more switches included in the respective rectifier branch are switched on and off at least once during a respective drive cycle, so that an operating state of the rectifier branches (rectifier stage) changes at least one in a respective drive cycle. A PFC rectifier operating in the normal mode is not only configured to regulate waveforms of the input currents but is also configured to regulate an output voltage of the PFC rectifier such that the output voltage is a direct voltage with a predefined voltage level.

The reduced switching mode is a 1/3 mode, for example. In the 1/3 mode, only one of the rectifier branches is operated in the switched mode, while the other two rectifier branches are statically operated. "To statically operate" may include to operate an electronic switch included in the respective rectifier branch in a predefined operating state for a plurality of successive drive cycles, that is, for a certain time period that is much longer than the time period of one drive cycle of the switched-mode operation. The rectifier stage that is operated in the switched mode changes several times throughout one period of the input voltages Va, Vb, Vc. According to one example, which one of the rectifier stages is operated in the switched mode is dependent on a relationship between the input voltages Va, Vb, Vc. According to one example, the rectifier stage that receives the intermediate input voltage is operated in the switched mode. The "intermediate input voltage" is that one of the input voltages that is between the other two input voltages. That is, at each time one of the three input voltages is the highest input voltage, one of the three input voltages is the lowest input voltage, and the intermediate input voltage is that one of the input voltages that is between the highest and the lowest input voltage.

As compared to operating the PFC rectifier 11 in the normal mode, switching losses that occur in the PFC rectifier 11 can be reduced in the 1/3 mode, so that the efficiency of operating the PFC rectifier 11 is higher in the 1/3 mode than in the normal operating mode. In the 1/3 mode, the PFC rectifier 11 is configured to regulate the input currents Ia, Ib, Ic. However, in the 1/3 mode, the PFC rectifier 11 is not capable of regulating the output voltage Vxz to be a direct voltage with a predefined voltage level. Instead, in order to be able to operate in the 1/3 mode, a waveform of the output voltage of the PFC rectifier is to be regulated by an electronic circuit different from the PFC rectifier 11.

Selecting from operating the power converter arrangement in the single-phase mode or the three-phase mode may include monitoring the input voltages Va, Vb, Vc and may include operating the power converter (PFC rectifier) 11 in the single-phase mode when the input voltages Va, Vb, Vc are identical and operating the power converter 11 in the three-phase mode when the input voltages are three different (phase shifted) alternating input voltages.

According to another example, selecting from operating the power converter arrangement in the single-phase mode or the three-phase mode includes receiving a mode selection signal by the control circuit 13 and operating the power converter 11 in the single-phase mode or the three-phase mode dependent on the selection signal. The selection signal can be any kind of signal that is suitable to enable the controller 13 to select between the two operating modes of the power converter 11. According to one example, the selection signal is a signal manually input by a human user. According to another example, the selection signal is automatically generated by a sensor that is configured to detect whether the power converter arrangement is connected to a three-phase power grid or a single phase power grid. According to one example, the sensor is configured to detect the type of plug that is used to connect the power converter arrangement to the power grid.

In a conventional power converter arrangement with a PFC rectifier, a power converter connected downstream the PFC rectifier is configured to regulate the output voltage of the PFC rectifier in order to enable the PFC rectifier to operate in the 1/3 mode.

In the power converter arrangement according to Figures 1 and 2, the buffer circuit 12 is synergetically controlled by the controller 13 such that the buffer circuit 12,

(a) in the single-phase mode, regulates the buffer circuit output voltage Vqr, and

(b) in the three-phase mode regulates the output voltage Vxz of the PFC rectifier 11.

According to one example, regulating the buffer circuit output voltage Vqr in the single phase mode includes regulating the output voltage Vqr such that it is essentially constant and does not include voltage ripples resulting from the alternating input power received by the PFC rectifier 11 in the single phase mode.

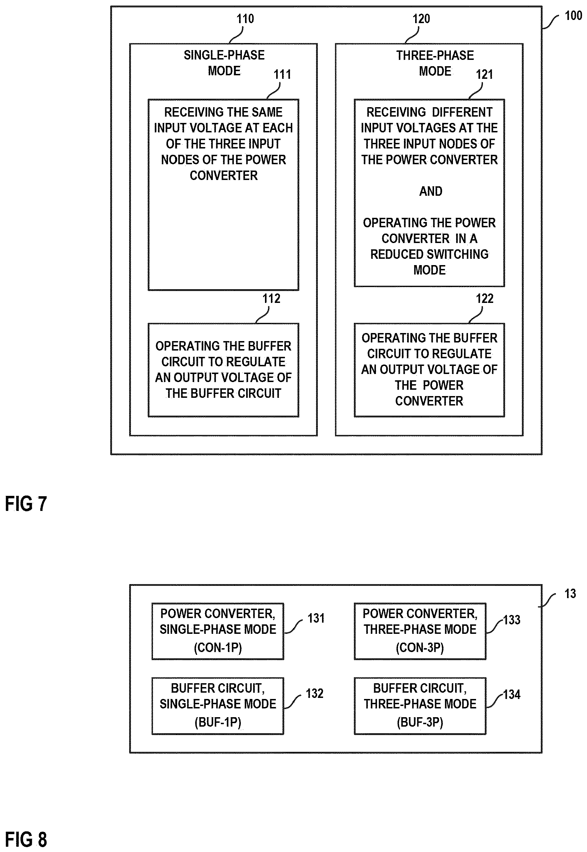

Figure 7 schematically illustrates one example of a method for operating the power converter arrangement according to Figures 1 and 2. Referring to Figure 7, the method 100 includes operating the power converter arrangement either in the single-phase mode 110 or the three-phase mode 120. Referring to Figure 7, and as explained before, operating the power converter arrangement in the single-phase mode includes receiving the same input voltage Vabc at each of the three input nodes a, b, c of the power converter 11 (111), and operating the buffer circuit 12 to regulate the output voltage Vqr of the buffer circuit 12 (112). Operating the power converter arrangement in the three-phase mode includes receiving different input voltages Va, Vb, Vc at the three input nodes a, b, c of the power converter 11 (121), and operating the buffer circuit 12 to regulate the output voltage Vxz of the power converter 11.

It should be noted that regulating the output voltage Vxz of the power converter 11 is the same as regulating the input voltage of the buffer circuit 12. Thus, voltage Vxz is referred to as output voltage of the power converter 11 or as input voltage of the buffer circuit 12 in the following. Equivalently, the output nodes x, z of the power converter 11 are input nodes of the buffer circuit 12. Thus, nodes x, z are referred to as output nodes of the power converter 11 or as input nodes of the buffer circuit 12 in the following.

Examples of the method according to Figure 7 are explained in the following with reference to different examples of the buffer circuit 12 and the power converter 11. PFC rectifiers that are capable of operating in a single phase mode or a three-phase mode are basically known, so that the focus of the following explanation is on the buffer circuit 12 and its operating principle.

Figure 8 illustrates a block diagram of the controller 13, which is configured to control operation of the power converter arrangement in accordance with the method illustrated in Figure 7. Referring to Figure 8, the controller 13 includes four control units, a first control unit 131 (CON-1P) configured to control operation of the power converter (CON) 11 in the single-phase (1P) mode; a second control unit 132 (BLTF-1P) configured to control operation of the buffer circuit (BUF) 12 in the single-phase (1P) mode; a third control unit 133 (CON-3P) configured to control operation of the power converter (CON) 11 in the three-phase (3P) mode; and a fourth control unit 134 (BLTF-3P) configured to control operation of the buffer circuit (BUF) 12 in the three-phase mode (3P). The first, second, third, and fourth control units 13 1, 132, 133, 134 are also referred to as first, second, third, and fourth controllers in the following.

It should be noted that Figure 8 illustrates the functionality of the controller 13 rather than a specific implementation. The controller 13 may be implemented in various ways. According to one example, the controller 13 with the different control units 131, 132, 133, 134 can be implemented as a dedicated control circuit. According to another example, the controller 13 includes a microcontroller, wherein the different control units are implemented as different program codes each configured to operate the microcontroller such that it has the functionality of the respective control unit.

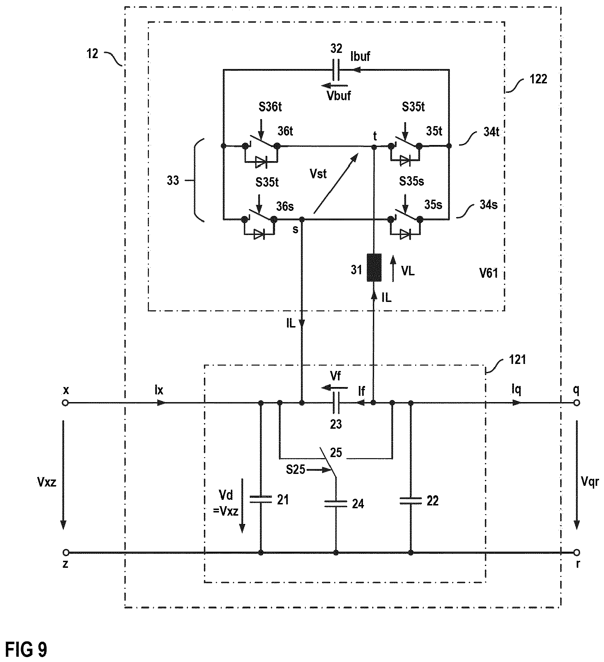

Figure 9 illustrates one example of the buffer circuit 12. The buffer circuit 12 includes a capacitor circuit 121 with a first capacitor 21 connected between output nodes x, z of the power converter 11 (not illustrated in Figure 9) wherein the output nodes x, z of the power converter 11 are also the input nodes of the buffer circuit 12. The capacitor circuit 121 further includes a second capacitor 22 connected between output nodes q, r of the buffer circuit 2, and a third capacitor 23. The third capacitor 23 is connected between the first capacitor 21 and the second capacitor 22 such that a series circuit including the first capacitor 21 and the third capacitor 23 is connected in parallel with the second capacitor 22. In the following, the first capacitor 21 is also referred to as input capacitor, the second capacitor 22 is also referred to as output capacitor, and the third capacitor 23 is also referred to as control capacitor.

In this buffer circuit 12, the output voltage Vqr of the buffer circuit 12 is given by the voltage across the second capacitor 22. Furthermore, an input voltage Vxz of the buffer, which is the output voltage Vxz of the power converter 11 (not illustrated in Figure 9), equals a voltage Vd across the first capacitor 21. In the buffer circuit 12 according to Figure 9, a second input node z of the buffer circuit 12, which is identical with a second output node of the power converter, and a second output node r of the buffer circuit 12 are directly connected, so that the output voltage Vqr is given by the input voltage Vxz plus a voltage Vf across the third capacitor 23. Thus, the output voltage Vqr can be regulated by suitably regulating the voltage Vf across the third capacitor 23.

Referring to Figure 9, the capacitor circuit 21 of the buffer circuit 12 may further include a fourth capacitor 24 and a switchover switch 25 that is controlled by a drive signal S25 provided by the controller 13. The switchover switch 25 is configured to connect the fourth capacitor 24 in parallel with the first capacitor 21 (input capacitor of the buffer circuit 2) or in parallel with the second capacitor 22 (output capacitor of the buffer circuit 2). According to one example, in the single-phase operation, the fourth capacitor 24 is connected in parallel with the first capacitor 21 in order to increase an input capacitance of the buffer circuit 12 and, in the three-phase operation, the fourth capacitor 24 is connected in parallel with the second capacitor 22 in order to increase an output capacitance of the buffer circuit 12.

According to one example, a capacitance of the fourth capacitor 24 is much higher than capacitances of the first, second, and third capacitors 21, 22, 23. According to one example, the capacitance of the fourth capacitor 24 is between 50 times and 200 times the capacitance of each of the first, second, and third capacitors 21, 22, 23. According to one example, the capacitance of each of the first, second, and third capacitors 21, 22, 23 is selected from between 3 microfarads ($\mu$F) and 10 microfarads ($\mu$F), and the capacitance of the fourth capacitor 24 is selected from between 200 $\mu$F and 600 $\mu$F.

Referring to Figure 9, the buffer circuit 12 further includes a voltage regulator 122. The voltage regulator 122 is controlled by the controller 13 (not illustrated in Figure 9) and is configured to regulate the voltage Vf across the third capacitor (control capacitor) 23 in order to regulate the output voltage Vqr. More specifically, the voltage regulator 122 is controlled by the second control unit 132 of the controller 13. One example of the second control unit 132 is explained herein further below.

Referring to Figure 9, the voltage regulator 122 includes an inductor 31, a buffer capacitor 32, and a bridge circuit 33 with a first half-bridge 34s and a second half-bridge 34t. Each of the first and second half-bridges 34s, 34t includes a first electronic switch 35s, 35t and a second electronic switch 36s, 36t connected in series, The series circuit including the first and second electronic switches 35s, 35t, 36s, 36t of each of the half bridges 34s, 34t is connected in parallel with the buffer capacitor 32. Furthermore, each of the first and second half bridges 34s, 34t includes a switched node s, t, which is a circuit node at which the respective first and second electronic switches 35s, 35t, 36s, 36t are connected. The switched node of one of the two half-bridges 34s, 34t is connected to one of the two circuit nodes of the third capacitor 23, and the switched node of the other one of the two half bridges 34s, 34t is connected to the other one of the two circuit nodes of the third capacitor 23. The inductor 31 is connected between the third capacitor 23 and the switched node of one of the two half-bridges 33, 34.

Just for the purpose of illustration, in the voltage regulator 122 according to Figure 9, the inductor 31 is connected between the switched node t of the second half-bridge 34t and a first circuit node of the third capacitor 23, wherein the first circuit node of the third capacitor 23 is the circuit node that is connected to a first output node q of the buffer circuit 12. The switched node s of the first half bridge 34s is connected to a second circuit node of the third capacitor 23, wherein the second circuit node of the third capacitor 23 is the circuit node connected to a first input node x of the buffer circuit 2 (which is a first output node of the power converter 11).

As illustrated, the electronic switches 35s, 35t, 36s, 36t of the first and second half-bridges 34s, 34t may include a switching element and a rectifier element (freewheeling element) connected in parallel with the switching element. According to one example, the electronic switches 35s, 35t, 36s, 36t are implemented as MOSFETs, wherein integrated body diodes of the MOSFETs form the freewheeling element. This, however, is only an example. Any other electronic switch with an integrated or external freewheeling element may be used as well.

In the buffer circuit 12 according to Figure 9, the voltage Vf across the third capacitor 23 is regulated by controlling the switched node voltage Vst. More specifically, the voltage Vf across the third capacitor 23 is regulated by controlling an average switched node voltage Vst_avg. The switched node voltage Vst is controlled by controlling operation of the bridge circuit 33. According to one example, the bridge circuit 33 operates in a switched mode. According to one example, operating the bridge circuit 33 in the switched mode includes operating the bridge circuit 33 in a plurality of successive drive cycles wherein, in each of the drive cycles, at least one of the first and second electronic switches of at least one of the first and second half-bridges 34s, 34t is switched on and off. The average switched node voltage Vst_avg is the switched node voltage Vst averaged over the duration of one or more drive cycles.

In the voltage regulator 122 according to Figure 9, the switched node voltage Vst of the bridge circuit 33 can be equal to the buffer voltage Vbuf, equal to the inverted buffer voltage -Vbuf, or zero. The buffer voltage Vbuf is the voltage across the buffer capacitor 32. In the example illustrated in Figure 9,

(a) the switched node voltage Vst equals the buffer voltage Vbuf when the first switch 35s of the first half bridge 34s and the second switch 36t of the second half-bridge 34t are switched on,

(b) the switched node voltage Vst equals the inverted buffer voltage -Vbuf when the first switch 35t of the second half-bridge 34t and the second switch 36s of the first half-bridge 34s are switched on, and

(c) the switched node voltage Vst is zero when either the first switches 35s, 35t of the half-bridges 34s, 34t or the second switches 36s, 36t of the half-bridges 34s, 34t are switched on at the same time.

The polarity (sign) and the voltage level of the average switched node voltage Vst_avg can be adjusted by suitably modulating the switched node voltage Vst between zero and the buffer voltage Vbuf or between zero and the inverted buffer voltage -Vbuf. In the voltage regulator 122 according to Figure 9, the average switched node voltage Vst_avg is given by

$$Vst_avg = d12 \cdot |Vbuf| \quad (2),$$

where d12 denotes a duty cycle of the switched mode operation of the bridge circuit 33. The duty cycle d12 can be positive or negative, wherein the average switched node voltage Vst_avg is positive when the duty cycle d12 is positive and negative when the duty cycle is negative d12. The magnitude of the duty cycle d12 indicates for which portion of an overall duration of the drive cycle the switched node voltage Vst equals the buffer voltage Vbuf or the inverted buffer voltage -Vbuf. If, for example, T12 denotes the duration of the drive cycle and Ton12 denotes the duration for which the switched node voltage Vst equals the buffer voltage Vbuf, the duty cycle is given by

$$d12 = \frac{Ton12}{T12} \quad (3a).$$

According to one example, the bridge circuit 33 is operated at a fixed switching frequency f12=1/T12, which is given by the reciprocal of the time duration T12 of one drive cycle. According to one example, the switching frequency f12 is in the range of between 20 kHz and 2 MHz, for example.

Referring to the above, the power converter 11 operates in a switched mode at a switching frequency. According to one example, the switching frequency of the power converter 11 is fixed. According to one example, the switching frequency of the voltage regulator 122 in the buffer circuit 12 is higher than the switching frequency of the power converter 11. The switching frequency of the voltage regulator 122 in the buffer circuit 12 is between 2 times and 5 times the switching frequency of the power converter 11, for example.

Based on equations (2) and (3a), the duty cycle d12 that is required to achieve a certain average switched node voltage Vst_avg can be calculated as follows:

$$d12 = \frac{Vst_avg}{|Vbuf|} \quad (3b),$$

wherein the duty cycle d12 is positive when a positive average switched node voltage Vst_avg is to be achieved and negative when a negative average switched node voltage Vst_avg is to be achieved.

In the buffer circuit 12 according to Figure 9, an input current Ix received at the input x, z by the buffer circuit 12 essentially equals an output current Iq provided at the output q, r of the buffer circuit 12. This current flows through the voltage regulator 122, wherein a (small) portion of the input current Ix is used to charge the buffer capacitor 32, which provides the buffer voltage Vbuf. The buffer voltage Vbuf is also regulated or adjusted by the switched mode operation of the bridge circuit 33, which is explained herein further below.

Referring to the above, the voltage Vf across the third capacitor 23 is regulated by suitably controlling the switched node voltage Vst. More specifically, by suitably controlling the switched node voltage Vst, a capacitive current If into or from the third capacitor 23 is regulated in order to regulate the voltage Vf across the third capacitor 23.

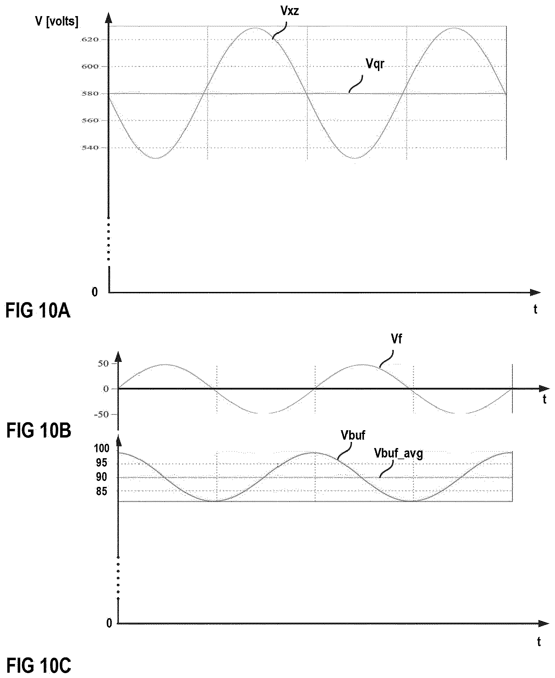

Figures 10A-10C show signal diagrams that illustrate the operating principle of the buffer circuit 12 according to Figure 9 in the single-phase mode. More specifically, Figures 10A-10C show signal diagrams of the buffer circuit input voltage Vxz, the buffer circuit output voltage Vqr, the voltage Vf across the third capacitor 23, and the buffer voltage Vbuf over one period of the alternating input voltage Vabc (not illustrated in Figures 10A-10C).

Referring to Figure 10A, the input voltage Vxz of the buffer circuit, which is the output voltage of the power converter 11, includes voltage ripples that have a frequency that is twice the frequency of the input voltage Vabc. As explained above, this voltage ripples result from the input power Pin having a sine squared waveform.

Referring to Figure 10A, the output voltage Vqr is essentially constant. Referring to Figure 10B, this is achieved by regulating the voltage Vf across the third capacitor 23 such that the voltage Vf across the third capacitor 23 includes voltage ripples of the same type as the input voltage Vxz but with a respective phase shift of 180°. "Of the same type" in this regard includes that the voltage ripples of the voltage Vf across the third capacitor 23 have the same frequency and amplitude as the voltage ripples of the input voltage Vxz. Referring to Figure 9, the input voltage Vxz plus the voltage Vf across the third capacitor 23 equals the output voltage Vqr. Thus, the capacitor voltage Vf compensates for the voltage ripples included in the input voltage Vxz, so that the output voltage Vqr is essentially constant.

In the example illustrated in Figure 10B, the voltage Vf across the third capacitor 23 is an alternating voltage, so that a DC offset is essentially zero. In this case, the output voltage Vqr equals an average of the input voltage Vxz. "Essentially zero" in this context means that the voltage Vf across the third capacitor 23 may include a low DC offset which is required for controlling the buffer voltage Vbuf and for compensating losses that may occur in the voltage regulator 122.

During operation of the buffer circuit 12, the buffer capacitor 32 is periodically charged and discharged. More specifically, the buffer capacitor 32 is discharged when the third capacitor 23 is to be charged and the buffer capacitor 32 is charged when the third capacitor 23 is to be discharged. Consequently, the buffer voltage Vbuf includes voltage ripples that have essentially the same frequency as the voltage ripples of the input voltage Vxz'. One example of the buffer voltage over one period of the alternating input voltage Vabc is illustrated in Figure 10C.

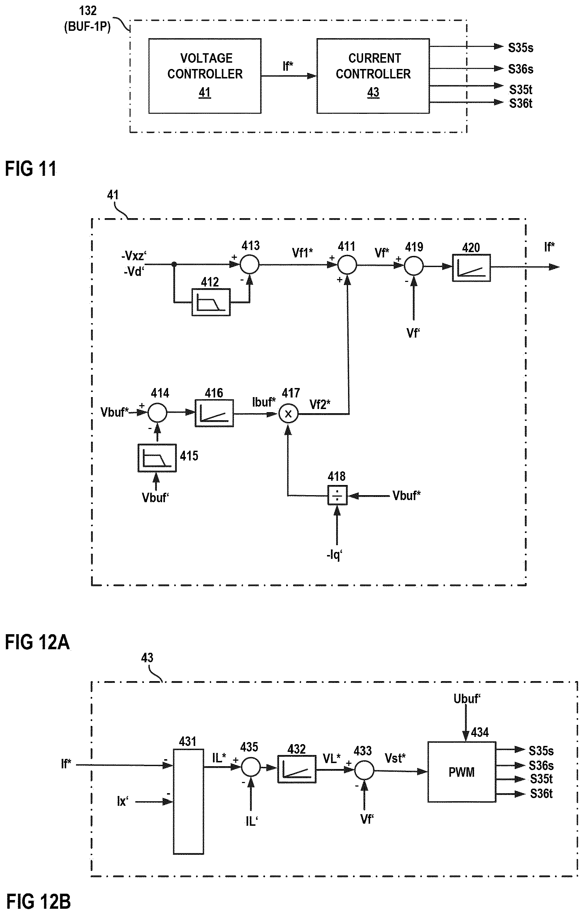

Figure 11 shows a block diagram of one example of the second control unit 132 (BLTF-1P) that is configured to control operation of the buffer circuit 12 according to Figure 9 in the single-phase mode. Referring to Figure 11, the second control unit 132 includes a voltage controller 41 that is configured to output a capacitor current reference If*. The capacitor current reference If* represents a desired current level of a current If into the third capacitor 23 in order to achieve the desired voltage level of the voltage Vf across the third capacitor 23. Furthermore, the second control unit 132 includes a current controller 43. The current controller 43 receives the capacitor current reference If* and is configured to control operation of the voltage regulator 122 such that the current If into the third capacitor 23 at least approximately equals the capacitor current reference If*. More specifically, the current controller 43 controls operation of the bridge circuit 33 by generating drive signals S35s, S35t, S36s, S36t that are received by the electronic switches 35s, 35t, 36s, 36t in the bridge circuit 33 and are configured to switch on or off the electronic switches 35s, 35t, 36s, 36t.

Figure 12A illustrates a more detailed example of the voltage controller 41 illustrated in Figure 11, and Figure 12B illustrates a more detailed example of the current controller 43 illustrated in Figure 11. Referring to Figure 12A, the voltage controller 41 generates the capacitor current reference If* dependent on a measured input voltage Vxz' and a buffer voltage reference Vbuf*.

The measured input voltage Vxz' represents the input voltage Vxz of the buffer circuit 12 and can be obtained by measuring the input voltage Vxz using a conventional voltage sensor. Voltage sensors are commonly known, so that no further explanation is required in this regard. In the following, "measured voltage" denotes a signal obtained by measuring a respective voltage. Equivalently, "measured current" denotes a signal obtained by measuring a respective current using a current sensor.

According to one example, the measured input voltage Vxz' is proportional to the input voltage Vxz. In the buffer circuit 12 according to Figure 9, the input voltage Vxz of the buffer circuit 12 equals a voltage Vd across the first capacitor 21, so that the measured input voltage Vxz' equals a measured capacitor voltage Vd'.

Referring to Figure 12A, the voltage controller 41 generates a capacitor voltage reference Vf*, wherein the capacitor voltage reference Vf* represents a desired voltage level of the voltage Vf across the third capacitor 23. The capacitor voltage reference Vf* varies over one period of the alternating input voltage Vabc in order to obtain a voltage waveform of the capacitor voltage Vf as illustrated in Figure 10B. In the example illustrated in Figure 9, the capacitor voltage reference Vf* includes a first capacitor voltage reference Vf1* and a second capacitor voltage reference Vf2* that are added by an adder 411.

The first capacitor voltage reference Vf1* is dependent on the measured input voltage Vxz' and is a portion of the capacitor voltage reference Vf* that is required to generate the capacitor voltage Vf dependent on the input voltage Vxz such that the output voltage Vqr is essentially constant. For this, the first capacitor voltage reference Vf1* is generated to represent a 180° phase-shifted version of the voltage ripples included in the input voltage Vxz. This is achieved by low-pass filtering the inverted measured input voltage -Vxz' by a low-pass filter 412 and by subtracting the low-pass filtered measured input voltage from the inverted measured input voltage -Vxz' by a subtractor 413. Using the inverted measured input voltage -Vxz' instead of the measured input voltage Vxz' ensures that the first capacitor voltage reference Vf1* has a phase shift of 180° relative to the voltage ripples included in the measured input voltage Vxz'. The output of the subcontractor 413 represents the 180° phase shifted voltage ripples included in the input voltage Vxz.

The second capacitor voltage reference Vf2* is dependent on the buffer voltage reference Vbuf* and is used to regulate the buffer voltage Vbuf such that the buffer voltage Vbuf or an average of the buffer voltage Vbuf essentially equals the buffer voltage reference Vbuf*. The buffer voltage reference Vbuf* has a predefined value, wherein the predefined value is selected such that the buffer voltage Vbuf is high enough to achieve an amplitude of the voltage across Vf across the third capacitor 23 that is at least the amplitude of the voltage ripples included in the input voltage Vxz in order to be able to compensate for such voltage ripples by adding the voltage Vf across the third capacitor 23 to the input voltage Vxz across the first capacitor 21.

Referring to Figure12A, the voltage controller 41 generates a buffer voltage error by subtracting a low-pass filtered measured buffer voltage Vbuf' from the buffer voltage reference Vbuf* by a subtractor 414. The measured buffer voltage Vbuf' is obtained by measuring the buffer voltage Vbuf, and the low-pass filtered measured buffer voltage is obtained by low-pass filtering the measured buffer voltage Vbuf' by a low-pass filter 415. A controller 416, such as a proportional controller, provides a buffer capacitor current reference Ibuf*. The buffer capacitor current reference Ibuf* represents a desired current into the buffer capacitor 32, which is the current that is required to adjust the buffer voltage Vbuf such that it equals the buffer voltage reference Vbuf*.

Referring to Figure 12A, the second capacitor voltage reference Vf2* is obtained by multiplying, using a multiplier 417, the buffer capacitor current reference Ibuf* with Vbuf*/-Iq', wherein Iq' denotes the measured output current. The quotient Vbuf*/-Iq' is provided by a divider 418 based on the capacitor voltage reference Vbuf* and the measured output current Iq'. The reason for this operation is briefly explained in the following.

The instantaneous power injected into the voltage regulator 122 and consequently the buffer capacitor 32 is Psvi = Vf·IL, where Vf denotes the voltage across control capacitor 23 and IL denotes the current through the inductor 31. The current IL through the inductor 31 is "quasi" constant and equal to the inverted output current -Iq. The voltage Vf across the capacitor 23, however, fluctuates as required by the first capacitor voltage reference Vf1*. Hence we get the power fluctuation which results in the voltage fluctuation of the buffer capacitor.

The average power injected into the voltage regulator 122 is given by Psvi_avg = Vf2*·IL. The low frequency power that is to be injected into the buffer capacitor is Pbuf* = Vbuf*·Ibuf*. Setting the average power Psvi_avg equal to the low frequency power Pbuf* (Psvi_avg = Pbuf*) results in Vf2* = Ibuf* · (Vbuf*/-Iq) and explains the operation performed by multiplier 417 and divider 418. In other words, the multiplier 417 and the divider 418 perform the conversion that "translates" the buffer current reference Ibuf* to the second capacitor voltage reference Vf2*.

Furthermore, referring to Figure 12A, the voltage controller 41 generates a capacitor voltage error by subtracting, by a subtractor 419, the measured voltage Vf' across the third capacitor 23 from the capacitor voltage reference Vf* of the third capacitor 23. A controller 420, such as a proportional controller, generates the capacitor current reference If*. The capacitor current reference If* represents the desired current into the third capacitor 23 that is required in order to achieve that the voltage Vf across the third capacitor 23 is in accordance with the capacitor voltage reference Vf*.

Referring to Figure 12B, the current controller 43 generates an inductor current reference IL*, which represents the desired current level of a current IL through the inductor 31 of the voltage regulator 22. Calculating the inductor current reference IL* includes, for example, adding the inverted capacitor current reference If*, and the inverted measured input current Ix' by an adder 431.

Referring to Figure 12B, a controller 432, such as a proportional controller generates an inductor voltage reference VL* based on a difference between the inductor current reference IL* and the measured inductor current IL'. This difference is provided by a subtractor 435, for example. The inductor voltage reference VL* represents the (average) voltage across the inductor 31 that is required in order to achieve an (average) current IL through the inductor that is in accordance with the inductor current reference IL*. Due to the switched mode operation of the bridge circuit 33 the current IL through the inductor 31 may vary. The average inductor current is the current through the inductor 31 averaged over the duration of at least one drive cycle of the bridge circuit 33.

Referring to Figure 12B, a subtractor 433 subtracts the measured voltage Vf' across the third capacitor 23 from the inductor voltage reference VL* in order to obtain a switched node voltage reference Vst*. The switched node voltage reference Vst* represents the (average) switched node voltage that is required in order to achieve a current through the inductor 31 that is in accordance in accordance with the inductor current reference IL*, so that the current If into the third capacitor 23 is in accordance with the capacitor current reference If* and so that the capacitor voltage Vf is in accordance with the capacitor voltage reference Vf*.

Referring to Figure 12B, a PWM modulator 434 receives the switched node voltage reference Vst* and operates the first and second half bridges 33, 34 such that the (average) switched node voltage Vst is in accordance with the switched node voltage reference Vst*. More specifically, the PWM modulator 434 generates the drive signals S35s, S35t, S36s, S36t that control operation of the first and second switches 35s, 35t, 36s, 36t of the bridge circuit 33. Each of these drive signals S35s, S35t, S36s, S36t switches on or switches off the respective electronic switch, wherein the PWM modulator 434 is configured to adjust the duty cycles of the drive signals S35s, S35t, S36s, S36t dependent on the switched node voltage reference Vst* and the measured buffer voltage Vbuf such that (as explained with reference to equations (2) to (4)) an average of the switched node voltage Vst at least approximately equals the switched node voltage reference Vst*.

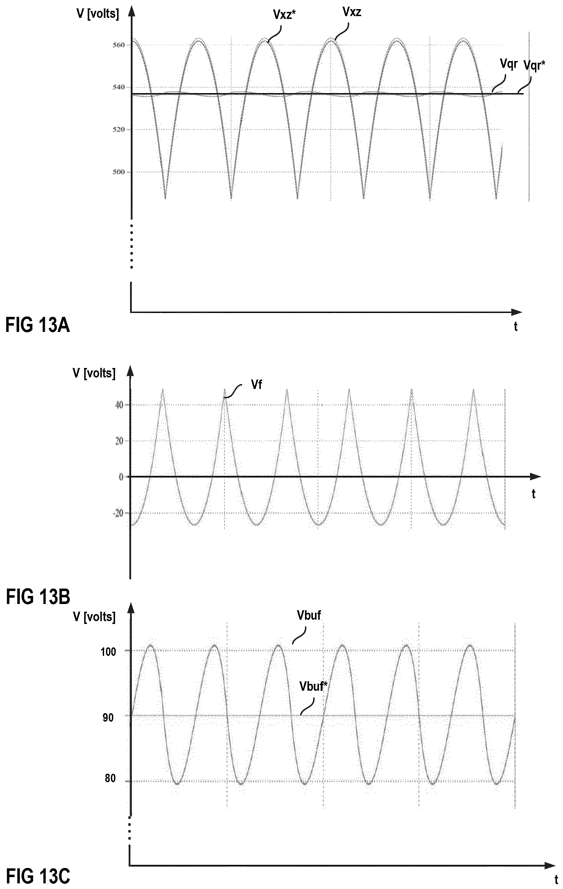

Figures 13A-13C show signal diagrams that illustrate the operating principle of the buffer circuit 12 according to Figure 9 in the three-phase mode. More specifically, Figures 13A-13C show signal diagrams of a buffer circuit input voltage reference Vxz* and a buffer circuit input voltage Vxz, the voltage Vf across the third capacitor 23, and the buffer voltage Vbuf over one period of the alternating input voltage Vabc (not illustrated in Figures 13A-13C). As explained above, in the three-phase mode, the buffer circuit 12 regulates the voltage level of the input voltage Vxz, which is the output voltage of the power converter (PFC rectifier) 1, wherein regulating the input voltage Vxz of the buffer circuit 12 enables the PFC rectifier 1 to operate in the 1/3 mode. The input voltage reference Vxz* represents the desired voltage level of the input voltage Vxz. As can be seen from Figure 13A, the buffer circuit 12 is configured to regulate the input voltage Vxz to be in accordance with the input/output voltage reference Vxz*.

Referring to Figure 13A, in order to enable the PFC rectifier 11 to operate in the 1/3 mode, the voltage Vxz at the output of the PFC rectifier 11 has a six-pulse shape similar to the six-pulse shape of the maximum line-to-line voltage Vll. The voltage reference Vxz* is provided by the third control unit 133 that controls operation of the PFC rectifier 1 in the three-phase mode. This is explained herein further below.

In the three-phase mode, the output voltage Vqr of the buffer circuit 12 is regulated by the PFC rectifier 11. More specifically, the PFC rectifier 11 regulates an average input power such that the average input power essentially equals a power consumption of the load, so that the output voltage Vqr is essentially constant. As outlined above, In the three-phase mode, variations of the input power are much lower than in the single-phase mode, so that voltage ripples of the output voltage Vqr resulting from the varying input power are much lower in the three-phase mode than in the single-phase mode. Thus, in the three-phase mode, the output voltage Vqr can be considered to be essentially constant, so that the input voltage Vxz of the buffer circuit, which is given by the output voltage Vqr minus the voltage Vf across the third capacitor 23, can be regulated by regulating the voltage Vf across the third capacitor 23.

In the three-phase mode, the buffer circuit 12 is controlled by the fourth control unit 134 to adjust the voltage Vf across the third capacitor 23 such that the capacitor voltage Vf essentially equals an inverted version of the six-pulse shaped voltage ripples included in the input voltage reference Vxz*. A signal waveform of the capacitor voltage Vf adjusted in this way is illustrated in Figure 13B.

Referring to Figure 13C, like in the single-phase mode, the buffer voltage Vbuf varies (oscillates) around the buffer voltage reference Vbuf*. In the three-phase mode, the buffer voltage reference Vbuf* may be the same as in the single-phase mode.

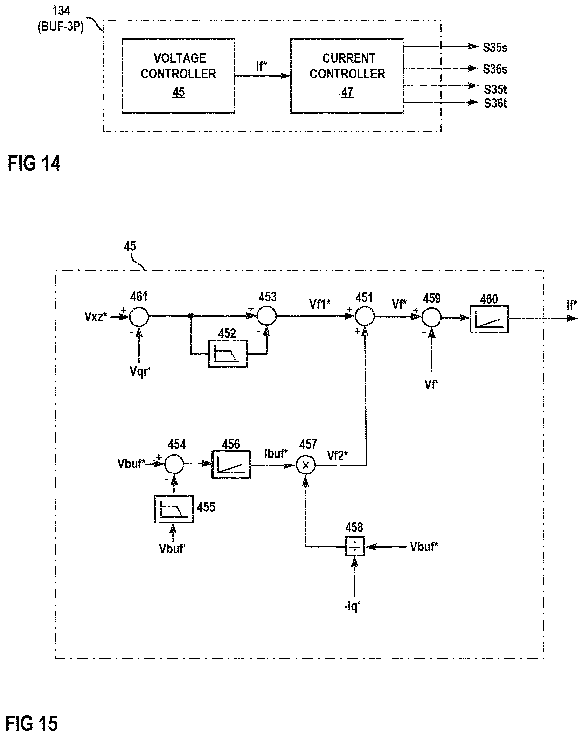

Figure 14 shows a block diagram of one example of the fourth control unit 134 (BUF-3P) that is configured to control operation of the buffer circuit 12 according to Figure 9 in the three-phase mode. Like the second control unit 132 illustrated in Figure 11, the fourth control unit 134 includes a voltage controller 45 configured to output the capacitor current reference If*, and a current controller 47 configured to receive the capacitor current reference If* and to control operation of the voltage regulator 122 such that the current If into the third capacitor 23 at least approximately equals the capacitor current reference If*.

One example of the voltage controller 45 is illustrated in Figure 15. The current controller 47 can be implemented in the same way as the current controller 43 illustrated in Figure 12B, so that with regard to the functionality of the current controller 47 reference is made to Figure 12B and the corresponding description.

Referring to Figure 15, the voltage controller 45 is similar to the voltage controller 41 illustrated in Figure 12A and is configured to generate the capacitor voltage reference Vf* by adding, using an adder 451, a first capacitor voltage reference Vf1* and a second capacitor voltage reference Vf2*. A subtractor 459, in the same way as subtractor 419 according to Figure 12A, generates a capacitor voltage error by subtracting the measured capacitor voltage Vf' from the capacitor voltage reference Vf*. Furthermore, controller 460, which is a proportional controller, for example, generates the capacitor current reference If* based on the capacitor voltage error.

In the voltage controller 45 according to Figure 15, the second capacitor voltage reference Vf2* is generated in the same way as in the voltage controller 41 according to Figure 12A. Thus, in the voltage controller 45, the subtractor 454 corresponds to subtractor 414 in the voltage controller 41, low-pass filter 455 corresponds low-pass filter 415, controller 456 corresponds to controller 416, multiplier 457 corresponds to multiplier 417, and divider 458 corresponds to divider 418. The second capacitor voltage reference Vf2* is that portion of the capacitor voltage reference Vf* that is used to regulate the buffer voltage Vbuf.

The first capacitor voltage reference Vf1*, which is usually much higher than the second capacitor voltage reference Vf2* and dominates the capacitor voltage reference Vf*, is that portion of the capacitor voltage reference Vf* that is used to adjust the capacitor voltage Vf to be in accordance with the inverted voltage ripples included in the input voltage reference Vxz*. Referring to Figure 15, generating the first capacitor voltage reference Vf1* includes subtracting the measured output voltage Vqr' from the input voltage reference Vxz* by a subtractor 461 in order to obtain a difference that represents the voltage ripples included in the input voltage reference Vxz*, and subtracting a low-pass filtered version of this difference from the difference by a further subtractor 453. A low-pass filter 452 generates the low-pass filtered difference. Subtracting the low-pass filtered difference from the difference removes a possible DC offset from the difference.

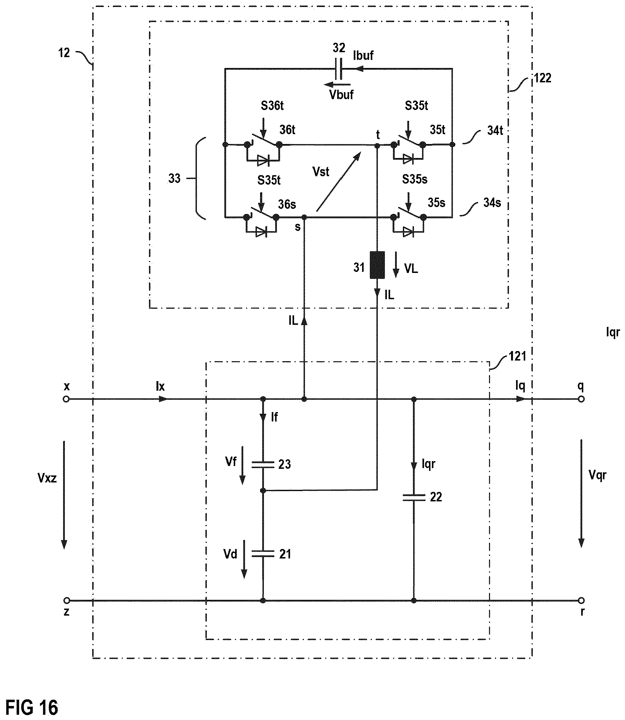

Figure 16 illustrates a buffer circuit 12 with a capacitor circuit 121 and a voltage regulator 122 according to another example. The voltage regulator 122 is implemented in the same way as the voltage regulator 122 according to Figure 9 and includes an inductor 31, a bridge circuit 33, and a buffer capacitor 32. The capacitor circuit 121 is different from the capacitor circuit 121 according to Figure 8 in that the third capacitor 23 is connected in series with the first capacitor 21 between the input nodes x, z of the buffer circuit 12,. The voltage Vf across the third capacitor 23 is regulated by the voltage regulator 122. In the buffer circuit 12 according to Figure 16, the first input node x and the first output node q of the buffer circuit 12 are directly connected, so that the load current Iq, different from the buffer circuit 12 according to Figure 9, does not flow through the voltage regulator 122. On the other hand, in the three-phase mode, the regulated voltage Vxz generated at the input of the buffer circuit is the same voltage as the output voltage Vqr, so that possible voltage ripples of this voltage Vxz also occur at the output q, r.

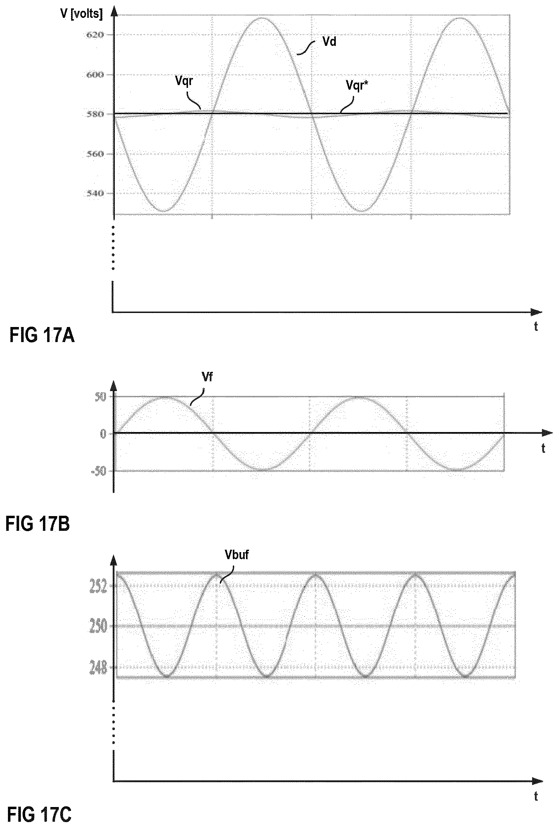

Figures 17A-17C show signal diagrams that illustrate the operating principle of the buffer circuit 12 according to Figure 16 in the single-phase mode. More specifically, Figures 17A-17C show signal diagrams of the voltage Vd across the first capacitor 21, the voltage Vf across the third capacitor 23 connected in series with the first capacitor 21, the voltage Vbuf across the buffer capacitor 32, and the output voltage Vqr, which equals the input voltage Vxz.

Referring to Figure 17A, the voltage Vd across the first capacitor 21 includes voltage ripples. These voltage ripples result from the varying input power in the single-phase mode (see Figure 4). Without the voltage regulator 122 voltage ripples would occur both in the voltage Vd across the first capacitor 21 and the voltage Vf across the third capacitor 23. Amplitudes of the voltage ripples in the voltage Vd across the first capacitor 21 and the voltage Vf across the control capacitor 23 may be different and are dependent on the capacitances of the first and second capacitors 21, 23 that form a capacitive voltage divider. According to one example, the capacitance of the control capacitor 23 is much lower than the capacitance of the first capacitor 21. According to one example, the capacitance of the control capacitor 23 is less than 10% or less than 5% of the capacitance of the first capacitor 21. Capacitances of the first and second capacitor 21, 22 may be in the same range as the capacitances of the first and second capacitors 21, 22 in the buffer circuit 12 according to Figure 16.

However, due to the voltage regulator 122 the voltage across the third capacitor 23 can be regulated such that this voltage Vf has a waveform that is different from the waveform resulting from the varying input power and counteracts voltage ripples occurring in the voltage Vf across the first capacitor 21.The voltage regulator 122 in combination with the control capacitor 23 fulfills two main tasks. First, the voltage regulator 122 generates the voltage Vf across the control capacitor 23 such that voltage ripples in the voltage Vd across the first capacitor 21 are essentially canceled out. Second, a current is injected into the first capacitor 21 that excites the first capacitor 21 to buffer voltage fluctuations resulting from the varying input power Pin.

Referring to Figure 17B, the voltage Vf across the third capacitor 23 is regulated such that the capacitor voltage Vf includes voltage ripples of the same type as the voltage Vd across the first capacitor 21 but with a phase shift of 180°. "Of the same type" in this regard includes that the voltage ripples of the voltage Vf across the third capacitor 23 have the same frequency and amplitude as the voltage ripples of the voltage Vd across the first capacitor 21. Referring to the above, the voltage Vd across the first capacitor 21 plus the voltage Vf across the third capacitor 23 equals the output voltage Vqr, so that the capacitor voltage Vf compensates for the voltage ripples included in the voltage Vd across the first capacitor 21 and the output voltage Vqr is essentially constant.

Referring to Figure 17C, like in the example explained with reference to Figures 9 and 10A-10B, the buffer voltage Vbuf varies over one period of the varying input voltage (not illustrated in Figures 7A-7C) as the capacitor voltage Vf varies.

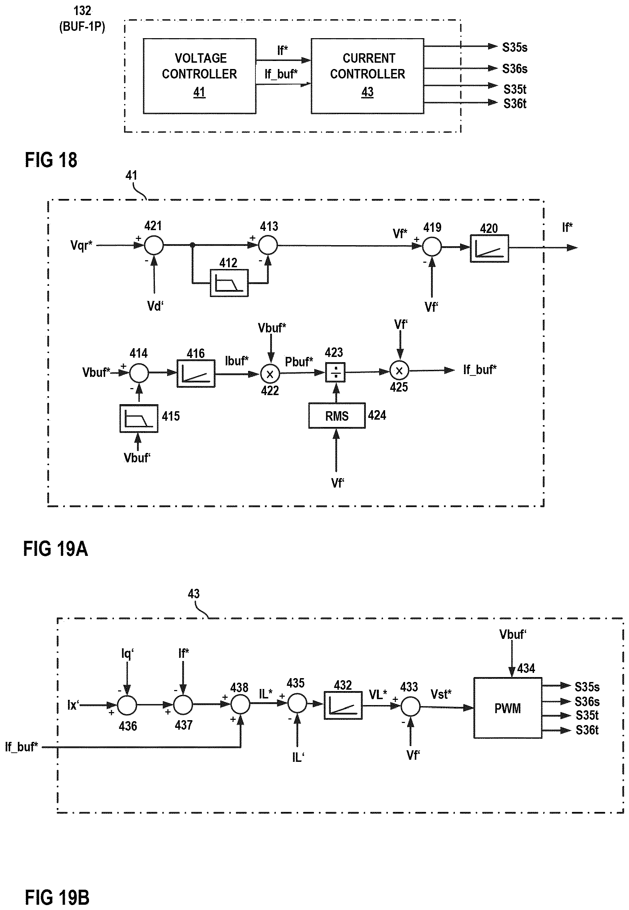

Figure 18 shows a block diagram of the second control unit 132 that is configured to control operation of the buffer circuit 12 illustrated in Figure 16 in the single-phase mode. This control unit 132 is in accordance with the second control unit 132 illustrated in Figure 11. Thus, the control unit 132 includes a voltage controller 41 configured to provide the capacitor current reference If*, and a current controller 43 configured to receive the capacitor current reference If* and to drive the bridge circuit 33 in order to adjust the switched node voltage Vst.

Examples of the voltage controller 41 and the current controller 43 are illustrated in Figures 19A, 19B. The voltage controller 41 according to Figure 19A is based on the voltage controller 41 according to Figure 12A, and the current controller 43 according to Figure 19B is based on the current controller 43 according to Figure 12B. In the voltage controller 41 according to Figure 19A same parts as in the voltage controller 41 according to Figure 12A are labeled with the same reference numbers, and in the current controller 41 according to Figure 19B same parts as in the current controller 43 according to Figure 12B are labeled with the same reference numbers. In the following, mainly the differences between the voltage controller 41 according to Figure 19A and the voltage controller according Figure 12A and the differences between the current controller 43 according to Figure 19B and the current controller according to Figure 12B are explained.

Referring to Figure 19A, the voltage controller 41 generates the capacitor voltage reference Vf* based on the measured voltage Vd' across the first capacitor 21 and the output voltage reference Vqr*. More specifically, a difference between the output voltage reference Vqr* and the measured capacitor voltage Vd' is generated by a subtractor 421. Low-pass filter 412 provides a low-pass filtered version of the difference, and subtractor 413 subtracts the low-pass filtered version of the difference from the difference in order to obtain the capacitor voltage reference Vf*. Further processing of the capacitor voltage reference Vf* in order to obtain the capacitor current reference If* is the same as in the voltage controller 41 according to Figure 12A.

In addition to the capacitor current reference If*, the voltage controller 41 according to Figures 18 and 19A generates a further current reference If_buf*. As explained with reference to Figure 19B, this further current reference If_buf* forms a portion of the inductor current reference IL*. More specifically, the further current reference If_buf* represents a portion of the desired current through the inductor 31 that is required to control the current Ibuf into the buffer capacitor 32 and, therefore, to control the buffer voltage Vbuf.

Referring to Figure 19A, generating the further current reference includes generating the buffer current reference Ibuf* based on the buffer voltage reference Vbuf* and the measured buffer voltage Vbuf as explained with reference to Figure 12A hereinabove. Generating the further current reference If_buf* further includes multiplying the buffer current reference Ibuf* with the buffer voltage reference Vbuf* using a multiplier 422 In order to obtain a buffer power reference Pbuf*, which represents a power to be received by the buffer capacitor 32 in order to achieve that the buffer voltage Vbuf essentially equals the buffer voltage reference Vbuf*. This buffer power reference Pbuf* is divided, using a divider 423, by the RMS value of the measured control capacitor voltage Vf'. The RMS value is provided by an RMS generator 424 that receives the measured control capacitor voltage Vf'. An output signal of the divider 423 is multiplied, by multiplier 425, with the measured control capacitor voltage Vf' in order to obtain the further current reference If_buf*. Due to multiplying the divider 423 Output signal with the measured control capacitor voltage Vf', the further current reference If_buf* is in phase with the voltage Vf across the control capacitor 23. Moreover, an amplitude of this further current reference If_buf* is dependent on the buffer power reference Pbuf*.

Referring to Figure 19B, in the current controller 43, an inductor current reference IL* is generated based on the capacitor current reference If*. The inductor current reference IL* is processed in the same way as in the current controller 43 according to Figure 12B, in order to generate the switched node voltage reference Vst* and drive the bridge circuit 33. The current controller 43 according to Figure 19B is different from the current controller according to Figure 12B in the way the inductor current reference IL* is generated based on the capacitor current reference If*.

In the current controller 43 according to Figure 19B, the measured output current Iq' is subtracted from the measured input current Ix' by a subtractor 436 in order to obtain a first difference, and the control capacitor current reference If* is subtracted from the first difference by a further subtractor 437 in order to obtain a second difference. The control capacitor reference If* is generated by the voltage controller 41 as explained hereinabove. Furthermore, the further voltage reference If_buf* generated by the voltage controller 41 is added to the second difference by an editor 431 in order to obtain the inductor current reference IL*

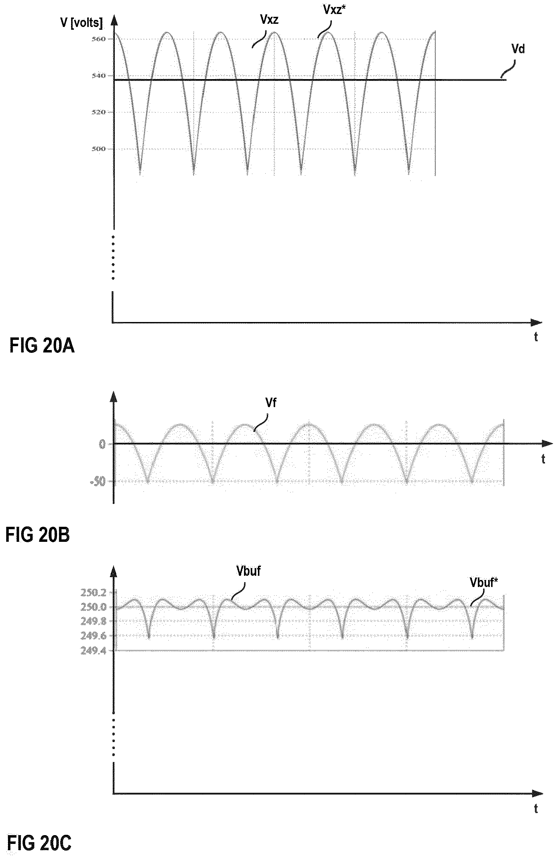

Figures 20A-20C show signal diagrams that illustrate the operating principle of the buffer circuit 12 according to Figure 16 in the three-phase mode. More specifically, Figures 20A-20C show signal diagrams of the voltage Vd across the first capacitor 21, the voltage Vf across the third capacitor 23 connected in series with the first capacitor 21, the voltage Vbuf across the buffer capacitor 32, and the input voltage Vxz over one period of the alternating input voltage Vabc (not illustrated in Figures 20A-20C). Referring to the above, in the buffer circuit 12 according to Figure 16, the input voltage Vxz equals the output voltage Vqr.

As explained above, in the three-phase mode, the buffer circuit 12 regulates the voltage level of the input voltage Vxz, which is the output voltage of the power converter (PFC rectifier) 1, wherein regulating the input voltage of the buffer circuit 12 enables the PFC rectifier 1 to operate in the 1/3 mode. The input voltage reference Vxz* represents the desired voltage level of the input voltage Vxz. As can be seen from Figure 20A, the buffer circuit 12 is configured to regulate the input voltage Vxz to be in accordance with the input/output voltage reference Vxzv.

Referring to Figure 20A, in order to enable the PFC rectifier 11 to operate in the 1/3 mode, the voltage Vxz at the output of the PFC rectifier 11 has a six-pulse shape similar to the six-pulse shape of the maximum line-to-line voltage Vll. The voltage reference Vxz* is provided by the third control unit 133 (CON-3P) that controls operation of the PFC rectifier 1 in the three-phase mode. This is explained herein further below.

In the three-phase mode, the voltage Vd across the first capacitor 21 is essentially constant, so that the input voltage Vxz with the six-pulse shape can be achieved by regulating the capacitor voltage Vf across the third capacitor 23 to have a six-pulse shape waveform.

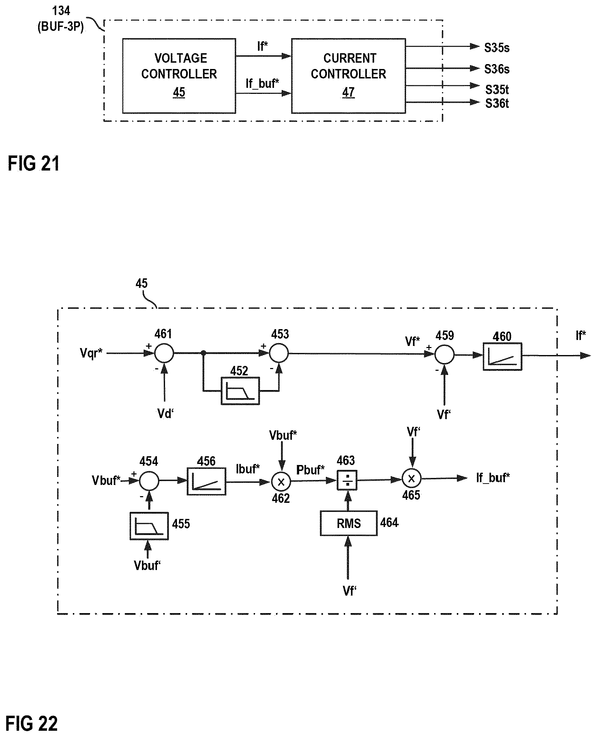

Figure 21 illustrates a block diagram of the fourth control unit 134 (BUF-3P) that is configured to control operation of the buffer circuit 12 according to Figure 16 in the three-phase mode. This control unit 134 is in accordance with the control unit 134 according to Figure 14 and includes a voltage controller 45 configured to generate a capacitor current reference If* and a current controller 47 configured to receive the capacitor current reference If* and drive the bridge circuit 33 in accordance with the capacitor current reference If*.

One example of the voltage controller 45 is illustrated in Figure 22. The current controller 47 according to Figure 21 is in accordance with the current controller 43 according to Figure 19B, so that with regard to the current controller 47 reference is made to Figure 19B and the corresponding description.

The voltage controller 45 illustrated in Figure 22 is very similar to the voltage controller 41 illustrated in Figure 19A and includes the same control topology as the voltage controller 41 illustrated in Figure 19A. In the voltage controller 45 according to Figure 22, in the control loop for generating the control capacitor reference If*, subtractor 461 corresponds to subtractor 421 in Figure 19A, low-pass filter 452 corresponds to low-pass filter 412, subtractor 453 corresponds to subjective 413, subtractor 459 corresponds to subtractor 419, and controller 460 corresponds to controller 420. The voltage controller 45 according to Figure 22 is different from the voltage controller 41 according to Figure 19A only in that the control capacitor reference If* is generated based on the output voltage reference Vxz* of the power converter 11 instead of the output voltage reference Vqr* of the buffer circuit 12. That is, subtractor 461 according to Figure 22 receives the output voltage reference Vxz* of the power converter 11, while subtractor 421 according to Figure 19A receives the output voltage reference Vqr* of the buffer circuit 12.

In the voltage controller 45 according to Figure 22, the control loop for generating the further current reference If_buf* is identical with the corresponding control loop in the voltage controller 41 according to Figure 19A. That is, in the control loop according to Figure 22, subtractor 454 corresponds to subtractor 414 in Figure 19A, low-pass filter 455 corresponds to low-pass filter 415, controller 456 corresponds to controller 416, multiplier 462 corresponds to multiplier 422, divider 463 corresponds to divider 423, RMS filter 464 corresponds to RMS filter 424, and multiplier 465 corresponds to multiplier 425.

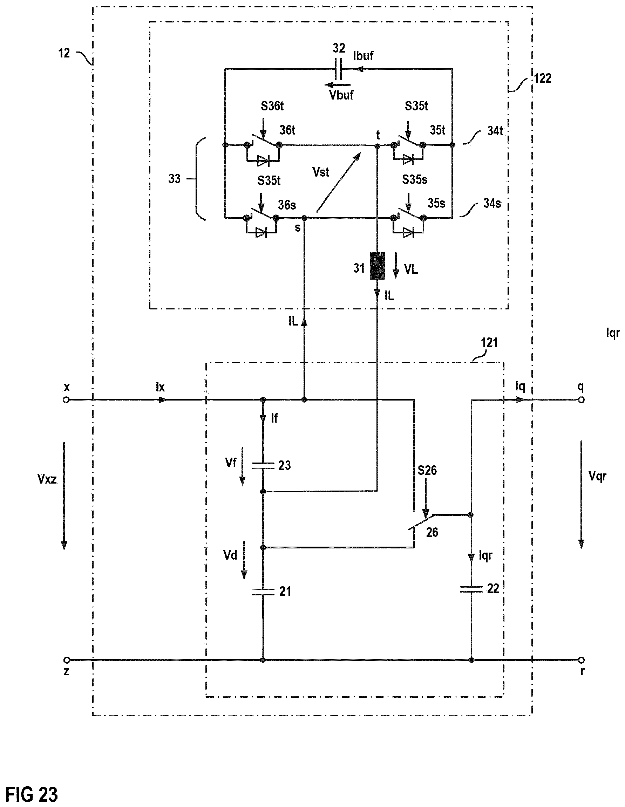

Figure 23 illustrates a modification of the buffer circuit 12 according to Figure 16. In the buffer circuit according to Figure 23, in the same way as in the buffer circuit according to Figure 16, the first and third capacitors 21, 23 are connected in series between the input nodes x, z, and the second capacitor 22 is connected between the output nodes q, r of the buffer circuit 12. Different from the buffer circuit according to Figure 16, the buffer circuit according to Figure 23 includes a switchover switch 26 that is configured to connect the second capacitor 22 either in parallel with the first capacitor 21 or in parallel with the series circuit including the first and third capacitors 21, 23.

The switchover switch 26 is controlled by the control circuit 13 (not illustrated in Figure 23), wherein the control circuit 13 is configured to operate the switchover switch 26 such that the second capacitor 22 is connected in parallel with the first capacitor 21 in the three-phase mode and is connected in parallel with the series circuit including the first and third capacitors 21, 23 in the single-phase mode. Thus, in the single-phase mode, the buffer circuit 12 according to Figure 23 operates in the same way as the buffer circuit 12 according to Figure 16 in the single-phase mode. In the three-phase mode, the voltage Vd across the first capacitor 21 equals the output voltage Vqr, which is essentially constant, and the input voltage Vxz is regulated by regulating the voltage Vf across the third capacitor 23 to have a waveform of the same type as the waveform illustrated in Figure 20B, so that the input voltage Vxz has a waveform of the type illustrated in Figure 20A.

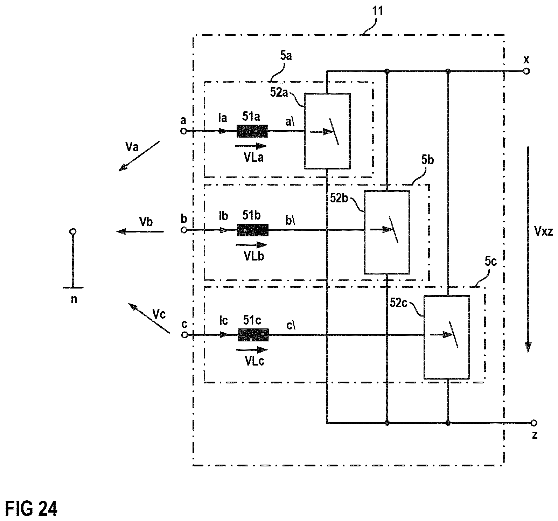

The PFC rectifier 11 may be implemented in various ways. Different examples for implementing the PFC rectifier 11 are explained in the following. Basically, as illustrated in Figure 24, the PFC rectifier 11 includes three rectifier stages 5a, 5b, 5c, which may also be referred to as rectifier branches or rectifier legs. Each rectifier stage 5a, 5b, 5c includes an inductor 51a, 52a, 52c connected between a respective one of the input nodes a, b, c and a respective switched node a\, b\, c\. Each of the switched nodes a\, b\, c\ is connected to the output nodes x, z through a switching circuit 52a, 52b, 52c, wherein each of the switching circuits 52a, 52b, 52c includes at least one electronic switch. Regulating the input currents Ia, Ib, Ic includes regulating voltages VLa, VLb, VLc across the inductors 51a, 51b, 51c, wherein regulating the voltages VLa, VLb, VLc includes adjusting electrical potentials at the switched nodes a\, b\, c\.

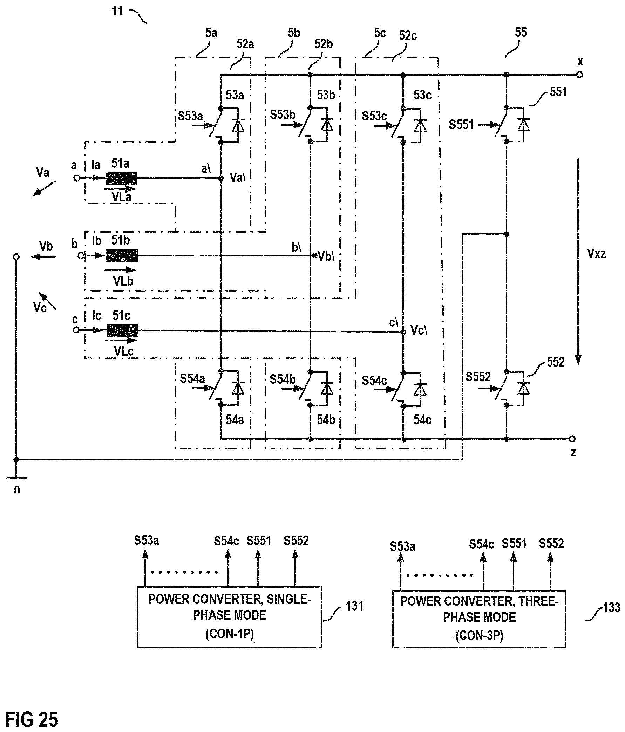

Figure 25 illustrates one example of a PFC rectifier 11 in greater detail. In the PFC rectifier 11 according to Figure 25, each of the rectifier stages 5a, 5b, 5c has a totem pole topology. In this case, each of the switching circuits 52a, 52b, 52c includes a half-bridge with a first electronic switch 53a, 53b, 53c and a second electronic switch 54a, 54b, 54c that are connected in series between the output nodes x, z, wherein the output nodes x, y are the input nodes of the buffer circuit 12 (not illustrated in Figure 25). The switched node a\, b\, c\ of each rectifier stage 5a, 5b, 5c is the circuit node at which the first and second switches 53a, 53b, 53c, 54a, 54b, 54c of the respective half-bridge are connected.

Furthermore, the PFC rectifier 1 includes an unfolding bridge 55 with a first electronic switch 551 and a second electronic switch 552 that are connected in series between the output nodes x, z. A circuit node at which the first and second electronic switches 551, 552 are connected is connected to the reference node n of the input voltages Va, Vb, Vc.

It should be noted that the unfolding bridge 55 is only in operation when the power converter 11 operates in the single-phase mode. In the three-phase mode, the unfolding bridge 55 is not active so that there is no circuit node in the power converter 11 that is connected to the reference node n in the three-phase mode. Furthermore, in the three-phase mode there is essentially no low frequency current into the reference node n. "Low-frequency" in this context means a frequency corresponding to the frequency of the input voltages Va, Vb, Vc or twice this frequency.

The operating principle of a PFC rectifier 11 with a totem pole topology is known. Thus the operating principle is only briefly explained in the following.

The switching circuits 52a, 52b, 52c and the unfolding bridge 55 are operated by the first control unit 131 (CON-1P) in the single-phase mode and the third control unit 133 (CON-3P) in the three-phase mode. For this, each of the first and third control units 131, 133 outputs drive signals S53a, S53b, S53c, S54a, S54b, S54c, S551, S552 received by the respective switches 53a, 53b, 53c, 54a, 54b, 54c, 551, 552. The switches 53a, 53b, 53c, 54a, 54b, 54c, 551, 552 may include a switching element and a rectifier element connected in parallel with the switching element. According to one example, the switches are implemented as MOSFETs. This, however, is only an example. Any other electronic switch with an integrated or external freewheeling element may be used as well.

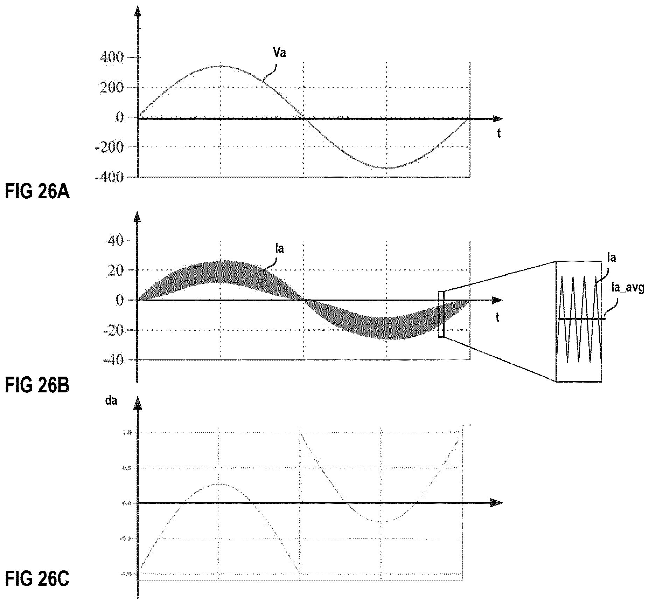

Figures 26A-26C shows signal diagrams that illustrate operation of the PFC rectifier 11 according to Figure 25 in the single-phase mode. In the single-phase mode, the rectifier stages 5a, 5b, 5c operate in the same way. Thus, Figures 26A-26C illustrate signal diagrams that illustrate operation of only the first rectifier stage 5a, that receives the first input voltage Va illustrated in Figure 26A and the first input current Ia illustrated in Figure 26B. A duty cycle da of a switched mode operation of the first rectifier stage 5a is illustrated in Figure 26C.

Operation of the PFC rectifier 11 in the single-phase mode is explained with reference to operation of the first rectifier stage 5a in the following.

As can be seen from Figures 26A and 26B, the first rectifier stage 5a is operated such that the average input current Ia has the same waveform as the input voltage Va, which is a sinusoidal waveform in the example illustrated in Figures 26A and 26B. The rectifier stage 5a is operated in a switched mode. Due to the switched mode operation of the rectifier stage 5a the input current Ia varies around the average input current Ia_avg. Figure 26B illustrates the envelope of the input current Ia. The average input current Ia_avg (illustrated in the enlarged section illustrated in Figure 26B) is in the middle of the envelope illustrated in Figure 26B.

Referring to the above, regulating the (average) input current Ia includes regulating an (average) voltage VLa across the inductor 51a. Regulating this voltage VLa includes regulating an electrical voltage Va\ at the switched node a\ by a switched mode operation of the switching circuit 52a with the first and second electronic switches 53a, 54a. In the single-phase mode, the unfolding bridge 55 is operated by the first control unit 131 such that during a positive halfwave of the input voltage Va the second electronic switch 552, which is the electronic switch connected between the second output node z and the reference node n, is switched on and the first electronic switch 551, which is connected between the first output node x and the reference node n is switched off. Equivalently, during a negative halfwave of the input voltage Va, the first electronic switch 551 is switched on and the second electronic switch 552 is switched off.

Referring to the above, the switching circuit 52a is operated in a switched mode. This includes operating the switching circuit 52a in a plurality of drive cycles. In each of the drive cycles, one of the first and second electronic switches 53a, 54a operates as a control switch and the other one of the first and second electronic switches 53a, 54a operates as a commutation switch. The control switch is operated in a PWM (pulsewith modulated) fashion. Operating the control switch in a PWM fashion includes operating the control switch in a plurality of successive drive cycles having a duration T11, includes operating the control switch in an on-state (switched-on state) for an on-time Ton11 and an off-state (switched-off state) for an off time Toff11 in each drive cycle. During the on-time Ton11, the control switch conducts the input current Ia through the inductor 51a.

During the off-time Toff11 of the control switch, the commutation switch takes over the input current. For this, the commutation switch may be operated in a complementary PWM fashion, which includes operating the commutation switch in the off-state during the on-time Ton11 and in the on-state during off time Toff11. Alternatively, the commutation switch may be operated in an off-state throughout the time period in which the control switch is operated in a PWM fashion. In this case, the freewheeling element of the commutation switch takes over the current during the off time off the control switch Toff11. Operating the commutation element in the complementary PWM fashion helps to reduce switching losses as compared to operating the commutation switch in the off-state.

During the positive halfwave of the input voltage Va, the second electronic switch 54a is the control switch that is operated in the PWM fashion and the first electronic switch 53a is the commutation switch. Equivalently, during the negative halfwave of the input voltage Va, the first electronic switch 53a is the control switch that is operated in the PWM fashion and the second electronic switch 54a is the commutation switch.

The switched node voltage Va\ is zero when the control switch is switched on and essentially equals either the output voltage Vxz or the inverted output voltage -Vxz when the control switch is switched off. During the positive halfwave, the switched node voltage Va\ equals the output voltage Vxz when the control switch is switched off, and, during the negative halfwave, the switched node voltage equals the inverted output voltage -Vxz when the control switch is switched off. Thus, by suitably adjusting the on-time Ton11 and the off-time Toff11 of the control switch the switched node voltage Va\ can be adjusted.

Basically, during the positive halfwave, the average switched node voltage Va\ is given by

$$Va\backslash = \frac{Toff11}{T11} \cdot Vxz = 0.5 \cdot (da + 1) \cdot Vxz \qquad (4a).$$

Equivalently, during the negative halfwave, the average switched node voltage Va\ is given by

$$Va\backslash = \frac{Toff11}{T11} \cdot (-Vxz) = 0.5 \cdot (-da + 1) \cdot (-Vxz) \qquad (4b).$$

In each case, Toff11 denotes the off-time of the control switch. Furthermore, in equations (4a) and (4b) da denotes a duty cycle of operating the rectifier stage 5a. One example of the duty cycle is illustrated in Figure 26C.

In the example illustrated in Figure 26C, the duty cycle ranges between -1 and +1. In this example, a magnitude Idal of the duty cycle defines the on-time and the off-time of one of the first and second switches 53a, 54a as follows:

$$Ton11 = \frac{1+|da|}{2} \cdot T11 \qquad (5a)$$

$$Toff11 = \frac{1-|da|}{2} \cdot T11 \quad (5b).$$

The sign of the duty cycle da indicates which of the first and second switches 53a, 54a has its on-time Ton11 and off-time Toff11 defined by equations (5a) and (5b), wherein the other one of the first and second switches is operated in a complementary fashion. According to one example, a negative sign of the duty cycle indicates that the on-time Ton11 and the off-time Toff11 of the second switch 54a is defined by equations (5a) and (5b), and a positive sign of the duty cycle indicates that the on-time Ton11 and the off time Toff11 of the first switch 53a is defined by equations (5a) and (5b).

Thus, for example, a duty cycle of the rectifier stage 5a of -1 means that the second switch 54a is switched on and the first switch 53a is switched off throughout the drive cycle; a duty cycle of +1 means that the first switch 53a is switched on and the second switch 54a is switched off throughout the drive cycle; a duty cycle of 0 means that each of the first switch 53a and the second switch 54a is switched on 50% of the drive cycle; a duty cycle of -0.5 means that the second switch 54a is switched on 75% of the drive cycle and the first switch 53a is switched on 25% of the drive cycle; and a duty cycle of 0.5 means that the first switch 53a is switched on 75% of the drive cycle and the second switch 54a is switched on 25% of the drive cycle.

As can be seen from Figure 26C, at the beginning and the end of the positive halfwave, the duty cycle is essentially da= - 1, so that the second switch 54a is switched on and the first switch 53a is switched off throughout the respective drive cycle, so that the switched node voltage Va\ is essentially zero. The drive cycle da increases towards the middle of the positive halfwave and, in the present example, is positive in the middle of the positive halfwave. This includes that the first switch 53a is switched on longer than the second switch 54a in drive cycles in the middle of the positive halfwave. In other words, the duration of the off time of the second switch 54a increases towards the middle of the positive halfwave.

Equivalently, at the beginning and the end of the negative halfwave, the duty cycle is essentially da=+1, so that the second switch 54a is switched off and the first switch 53a is switched on throughout the respective drive cycle, so that the switch node voltage Va\ is essentially 0. The drive cycle da decreases towards the middle of the negative halfwave and, in the present example, is negative in the middle of the negative halfwave. This includes, that the second switch 54a is switched on longer than the first switch 53a in drive cycles in the middle of the positive halfwave. In other words, the duration of the off time of the first switch 53a increases towards the middle of the positive halfwave.

According to one example, the duration T11 of the individual drive cycles is fixed, so that the rectifier stages operate at a fixed switching frequency. The fixed switching frequency is selected from between 20 kHz and 2 MHz, for example.

Based on a switched node voltage reference Va*, which represents a desired voltage level of the switched node voltage Va\ and the measured output voltage Vxz', the duty cycle da, during the positive halfwave, can be calculated (adjusted) as follows,

$$da = 2 \cdot \left(\frac{Va\backslash *}{Vxz'}\right) - 1 \quad (6a).$$

Equivalently, during the negative halfwave for, the duty cycle can be calculated (adjusted) as follows,

$$da = 2 \cdot \left(\frac{Va\backslash *}{Vxz'}\right) + 1 \quad (6b).$$

Duty cycles db, dc of the rectifier stages 5b, 5c can be calculated based on respective switched node voltage references Vb*, Vc* in the same way.

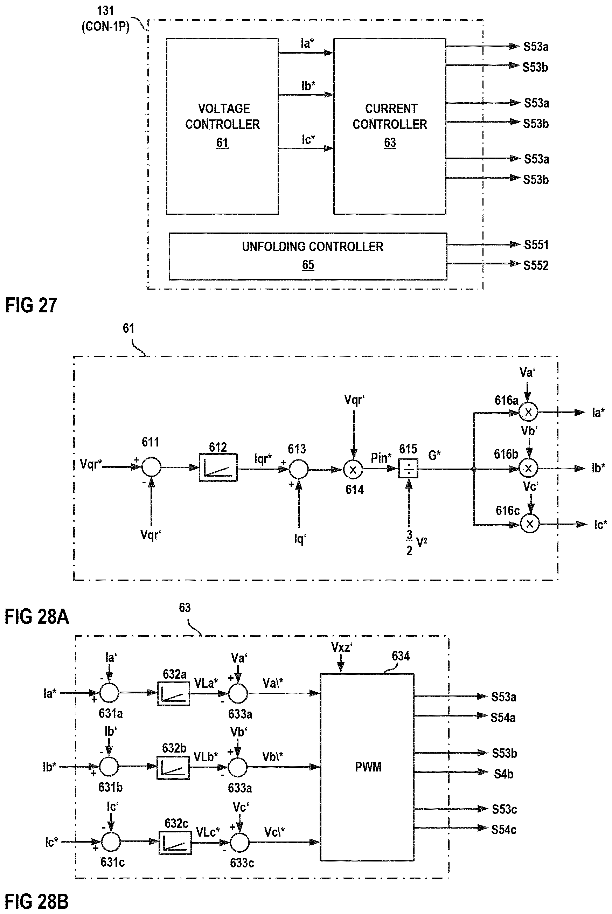

Figure 27 illustrates one example of the first control unit 131 (CON-1P) that is configured to control operation of the PFC rectifier 11 according to Figure 25 in the single-phase mode. Referring to Figure 27, the first control unit 131 includes a voltage controller 61 that is configured to generate input current references Ia*, Ib*, Ic*, wherein each of these input current references represents a desired average input current at the respective input node a, b, c. As explained above, due to the switched mode operation of the rectifier stages 5a, 5b, 5c the input currents Ia, Ib, Ic may vary. "Average input current" in this context means the average of the respective input current over the duration of at least one drive cycle of the switched mode operation. In the following, unless stated otherwise, "input current" denotes the average input current, and measured input current denotes the measured average input current.

Referring to Figure 27, the first control unit 131 further includes a current controller 63, that receives the input current references Ia*, Ib*, Ic* and controls operation of the rectifier stages 5a, 5b, 5c. More specifically, the current controller 63 controls operation of the switching circuits 52a, 52b, 52c by generating the respective drive signals S53a, S53b, S53c, S54a, S54b, S54c received by the switches in the switching circuits 52a, 52b, 52c. An unfolding controller 65 controls operation of the unfolding bridge 55 in the way explained above, that is, by switching on the second switch 552 during the positive half wave and switching on the first switch 551 during the negative halfwave of the input voltage Va.

Figure 28A illustrates one example of the voltage controller 61 according to Figure 27, and Figure 28B illustrates one example of the current controller 63 according to Figure 27. Referring to Figure 28A, the voltage controller 61 generates a conductance reference G*, which represents a desired input conductance of the PFC rectifier 11. Each of the input current references Ia*, Ib*, Ic* is generated by multiplying, using a respective multiplier 616a, 660b, 660c, the conductor current reference G* by the respective measured input voltage Va', Vb', Vc'.

Referring to Figure 28A, calculating the conductance reference includes subtracting, by a subtractor 611, the measured output voltage Vqr' of the power converter arrangement, which is the measured output voltage Vqr' of the buffer second 12, from an output voltage reference Vqr*. According to one example, the output voltage reference Vqr* is a predefined value that defines a desired voltage level of the output voltage Vqr received by the load Z or the further power converter 14. A controller 612, such as a proportional controller, calculates the output capacitor reference Iqr* explained above. The output capacitor reference Iqr* represents a desired current into the second capacitor (output capacitor) 22 that is required in order to ensure that the output voltage Vqr at least approximately equals the output voltage reference Vqr*. An adder 613 adds the output capacitor reference Iqr* and the measured output current Iq', wherein the result represents an overall current that is to be provided by the PFC rectifier 11 at the circuit node at which the output capacitor 22 is connected to the output q. A multiplier 614 multiplies this overall current with the measured output voltage Vqr' in order to obtain an input power reference Pin*. The input power reference Pin* represents an average of the input power Pin over one period of the alternating input voltage that is required in order to achieve that the output voltage Vqr at least approximately equals the output voltage reference Vqr*. This input power reference Pin* is divided by $\frac{3}{2}V^2$, where V denotes the amplitude of the input voltage Vabc, in order to obtain the conductance reference G*.

It should be noted that a portion of the input power Pin is consumed by the voltage regulator 122. This portion of the input power Pin, however, is very low, so that it is not considered in the control scheme according to Figure 28A.

Referring to Figure 28B, the current controller 63 includes a PWM modulator 634 that receives the switched node voltage references Va*, Vb*, Vc* and the measured output voltage Vxz' and is configured to generate the drive signals S53a, S54a, S53b, S54b, S53c, S54c received by the electronic switches in the switching circuit 52a, 52b, 52c such that the average switched node voltages are adjusted in accordance with equations (5a) and (5b) explained hereinabove.

The current controller 63 according to Figure 28B includes three controller branches, wherein each of these controller branches is configured to provide one of the three switched node voltage references Va*, Vb*, Vc*. In the following, a first controller branch that is configured to generate the first switched node voltage Va* based on the first input current reference Ia* is briefly explained in the following. The other two controller branches are implemented and operated in the same way. In the three controller branches, like parts are labeled with the same reference signs that are different by added character "a" in the first controller branch, "b" and the second controller branch, and "c" in the third controller branch.

Referring to Figure 28B, the first controller branch includes an adder 631a that subtracts the measured first input current Ia' from the first input current reference Ia* to obtain an input current error. A controller 632a, such as a proportional controller, generates an inductor voltage reference VLa* based on the input current error. The inductor voltage reference VLa* represents the desired average voltage across the first inductor 51a that is required in order to achieve that the first input current at least approximately equals the first input current reference Ia*. The switched node voltage Va* reference is given by the measured first input voltage Va' (which equals the measured input voltage Vabc' in the single-phase mode) minus the inductor voltage reference VLa* and is provided by a subtractor 633a that receives the measured input voltage Va' and the inductor voltage reference VLa*.

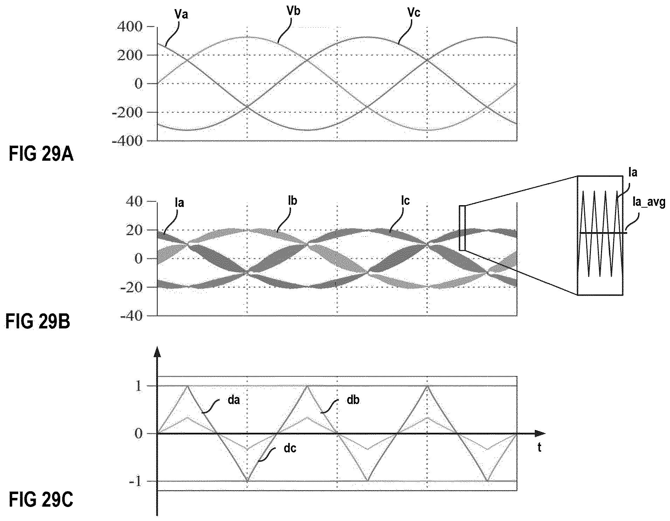

Figures 29A-29C show signal diagrams that illustrate operation of the PFC rectifier 11 according to Figure 25 in the three-phase mode. Figure 29A shows signal diagrams of the three different input voltages Va, Vb, Vc, Figure 29B illustrates envelopes of the input currents Ia, Ib, Ic, and Figure 29C shows duty cycles da, db, dc of switched mode operations (PWM operations) of the rectifier stages 5a, 5b, 5c.

Referring to the above, in the three-phase mode, the unfolding bridge 55 is deactivated. That is, the first and second electronic switches 551, 552 of the unfolding bridge 55 are switched off, so that none of the circuit nodes of the power converter 11 that are active in the three-phase mode is connected to the reference node n.

Duty cycles of switched mode operations (PWM operations) of the rectifier stages 5a, 5b, 5c, dependent on switched node voltage references Va*, Vb*, Vc* and a common mode voltage reference Vcm, are given by,

$$da = \frac{Va\backslash^{*} + Vcm}{\frac{1}{2}Vxz} \quad (7a)$$

$$db = \frac{Vb\backslash^{*} + Vcm}{\frac{1}{2}Vxz} \quad (7b)$$

$$dc = \frac{Vc\backslash^{*} + Vcm}{\frac{1}{2}Vxz} \quad (7c).$$

The common mode voltage Vcm is the voltage between a virtual midpoint of the output nodes x, z and the reference node n to which the input voltages Va, Vb, Vc are referenced to.

The common mode voltage Vcm can be obtained either by obtaining the median median(.) of the three switched node voltage references Va*, Vb*, Vc* and multiplying the obtained median with 0.5,

$$Vcm = 0.5 \cdot median(\mathrm{Va}\backslash *, \mathrm{Vb}\backslash *, \mathrm{Vc}\backslash *) \quad (8a),$$

or by calculating the common mode voltage reference Vcm* as follows:

$$Vcm^{*} = -0.5 \cdot [\max(\mathrm{Va}\backslash *, \mathrm{Vb}\backslash *, \mathrm{Vc}\backslash * ) + \min(\mathrm{Va}\backslash *, \mathrm{Vb}\backslash *, \mathrm{Vc}\backslash * )] \quad (8b),$$

where max(.) denotes a maximum operator that selects the maximum of the three switched node voltage references Va*, Vb*, Vc*, and min(.) denotes a minimum operator that selects a minimum of the three switched node voltage references Va*, Vb*, Vc*.

As can be seen from Figure 29C, the duty cycles da, db, dc may vary between -1 and +1. These duty cycles define the on-times and the off times of the first switch 53a, 53b, 53c and the second switch 54a, 54b, 54c in each of the rectifier stages 5a, 5b, 5c in the same way as explained with regard to the duty cycle da and the first and second switches 53a, 54a in the single-phase hereinabove. That is, for example, a duty cycle of -1 means that the respective second switch 54a, 54b, 54c is switched on and the respective first switch 53a, 53b, 53c is switched off throughout a respective drive cycle; a duty cycle of +1 means that the respective second switch 54a, 54b, 54c is switched off and the respective first switch 53a, 53b, 53c is switched on throughout a respective drive cycle; a duty cycle of 0 means that each of the respective first switch 53a, 53b, 53c and the respective second switch 54a, 54b, 54c is switched on 50% of the respective drive cycle. As can be seen from Figure 29C, at each time only one of the three duty cycles is different from -1 and +1. Thus, at each time only one of the three rectifier stages 5a, 5b, 5c operates in the switched mode, while the other two rectifier stages are statically operated with either the respective first switch or the respective second switch switched on throughout the respective drive cycle.

During a time period in which the second input voltage Vb is the highest voltage and the first input voltage Va is the lowest voltage, for example, the first and second rectifier stages 5a, 5b are statically operated. That is, the duty cycle of the second rectifier stage 5b is db=+1 so that the first switch 53a is switched on throughout the drive cycles and the duty cycle of the first rectifier stage 5a is db=-1 so that the second switch 54a is switched on throughout the drive cycles. The first and second rectifier stages5a, 5b are statically operated as long as the second input voltage Vb is the highest voltage and the first input voltage is the lowest voltage. When the relationship of the input voltages Va, Vb, Vc changes so that, for example, the third input voltage Vc is the highest input voltage and the first input voltage Va is the lowest input voltage, the third and first rectifier stages 5c, 5a are statically operated and the second rectifier stage 5b is operated in the switched mode.

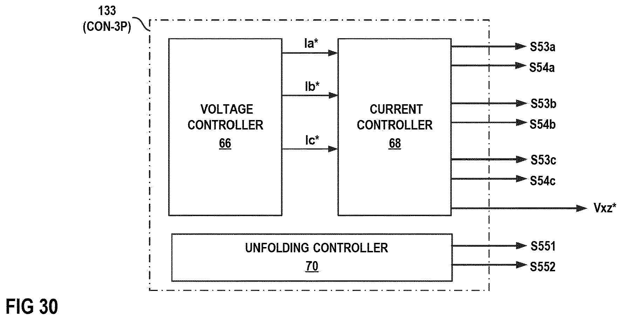

Figure 30 illustrates one example of the third control unit 133 (CON-3P) that is configured to control operation of the PFC rectifier 11 according to Figure 25 in the three-phase mode. Referring to Figure 30, the third control unit 133 includes a voltage controller 66 that is configured to generate the input current references Ia*, Ib*, Ic*, wherein each of these input current references Ia*, Ib*, Ic* represents a desired average input current at the respective input node a, b, c. As explained above, due to the switched mode operation of the rectifier stages 5a, 5b, 5c the input currents Ia, Ib, Ic may vary. "Average input current" in this context means the average of the respective input current over the duration of at least one drive cycle of the switched mode operation. In the following, unless stated otherwise, "input current" denotes the average input current, and "measured input current" denotes the measured average input current.

Referring to Figure 30, the third control unit 133 further includes a current controller 68, that receives the input current references Ia*, Ib*, Ic* and controls operation of the rectifier stages 5a, 5b, 5c. More specifically, the current controller 63 controls operation of the switching circuits 52a, 52b, 52c by generating the respective drive signals S53a, S53b, S53c, S54a, S54b, S54c received by the switches in the switching circuits 52a, 52b, 52c. An unfolding controller 70 controls operation of the unfolding bridge 55 in the way explained above, that is, by deactivating the unfolding bridge 55, wherein deactivating the unfolding bridge 55 includes switching off both the first switch 551 and the second switch 552 throughout the three-phase mode.

Moreover, the third control unit 133 outputs an output voltage reference Vxz*, which represents the desired voltage Vxz at the output of the PFC rectifier 11 and the input of the buffer circuit 12.

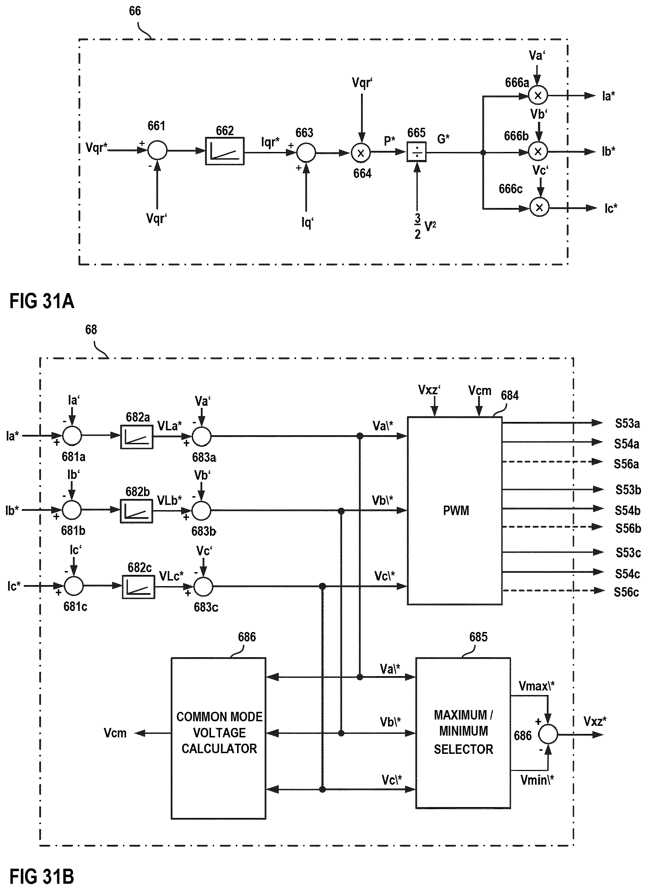

Figure 31A illustrates one example of the voltage controller 66 according to Figure 30, and Figure 31B illustrates one example of the current controller 68 according to Figure 30. The implementation and the functionality of the voltage controller 66 according to Figure 31A is the same as the implementation and the functionality of the voltage controller 61 according to Figure 28A, so that reference to the description of Figure 28A is made. In the controller 66 according to Figure 31A, subtractor 661 corresponds to subtractor 611 in Figure 28A, controller 662 corresponds to controller 612, adder 663 corresponds to adder 613, multiplier 664 corresponds to multiplier 614, divider 665 corresponds to divider 615, and multipliers 666a, 666b, 666c correspond to multipliers 616a, 616b, 616c.

The current controller 68 according to Figure 31B is based on the current controller 63 according to Figure 28B. Like the current controller 63 according to Figure 28B, the current controller 68 according to Figure 31B includes three controller branches, wherein each of these controller branches outputs a respective one of the switched node voltage references Va*, Vb*, Vc* to a PWM modulator 684. The PWM modulator, in addition to the switch node voltage references Va*, Vb*, Vc* receives the measured output voltage Vxz' and the common mode voltage Vcm and is configured to control operation of the switching circuits 52a, 52, 52c in accordance with equations (6a)-(6c) such that the average switched node voltages Va\, Vb\, Vc\ equal the switched node voltage references Va*, Vb*, Vc*.

The common mode voltage Vcm is provided by a common mode voltage calculator 686 that receives the switched node voltage references Va*, Vb*, Vc* and is configured to obtain (calculate) the common mode voltage reference Vcm* based on the switched node voltage references Va*, Vb*, Vc* as explained with reference to equations (8a) and (8b) hereinabove.

Each of the three controller branches is in accordance with the three controller branches in the current controller 63 according to Figure 28B. That is, in the current controller 68 according to Figure 31B, subtractors 681a, 681b, 681c correspond to subtractors 631a, 631b, 631c in the current controller 63 according to Figure 28B, controllers 682a, 682b, 682c correspond to controllers 632a, 632b, 632c, and subtractors 683a, 683b, 683c correspond to subtractors 633a, 633b, 633c.

Referring to Figure 31B, the current controller 68 furthermore includes a maximum/minimum selector that receives the switched node voltage references Va*, Vb*, Vc* and selects a highest one of these switched node voltage references Va*, Vb*, Vc* as a maximum switched node voltage reference Vmax* and a lowest one of these switched node voltage references Va*, Vb*, Vc* as a minimum switched node voltage reference Vmin*. It can be shown that when operating the PFC rectifier 11 in the three-phase mode, the maximum switched node voltage reference Vmax* is always positive and the minimum switch node voltage reference Vmin* is always negative. A subtractor 686 calculates the difference between the maximum and the minimum switched node voltage references Vmax*, Vmin* in order to provide the output voltage reference Vxz*.

Generating the output voltage reference Vxz* in this way ensures that at each time the voltage Vx at the first output node x equals the desired switched node voltage at one of the switched nodes a\, b\, c\ and the voltage Vz at the second output node z equals the desired switched node voltage at another one of the switched nodes a\, b\, c\. Thus, considering equations (8a)-(8c), that rectifier stage that has its switched node voltage reference in correspondence with the output voltage Vx at the first output node x can be operated "statically" with a duty cycle of +1, and that rectifier stage that has its switched node voltage reference in correspondence with the output voltage Vz at the second output node z can be operated "statically" with a duty cycle of -1. The remaining rectifier stage is operated in a PWM mode. Thus, by adjusting the output voltage reference Vxz* reference based on the switched node voltage references Va*, Vb*, Vc* two of the three rectifier stages can be statically operated in a predefined operating state for a plurality of successive drive cycles, which is equivalently to operating the PFC rectifier 11 in the 1/3 mode.

Which of the three rectifier stages operate statically, and which of the three rectifier stages operates in the PWM mode changes several times during each period of the input voltages Va, Vb, Vc. This is briefly explained in the following.

The (average) inductor voltages VLa, VLb, VLc are rather low as compared to the amplitudes of the input voltages Va, Vb, Vc, so that each of the switched node voltages Va\, Vb\, Vc\ essentially follows the respective input voltages Va, Vb, Vc. Thus, the maximum switched node voltage reference Vmax* essentially equals the highest one of the three input voltages Va, Vb, Vc, and the minimum switched node voltage reference Vmin* essentially equals the lowest one of the three input voltages Va, Vb, Vc. Thus, as can be seen from Figures 29A-29C, the rectifier stage receiving the highest input voltage is operated in the static mode with a duty cycle of +1, the rectifier stage receiving the lowest input voltage is operated in the static mode with a duty cycle of -1, and the rectifier stage receiving the intermediate input voltage, which is the input voltage between the highest and the lowest input voltage, is operated in the PWM mode with a duty cycle of between -1 and +1.

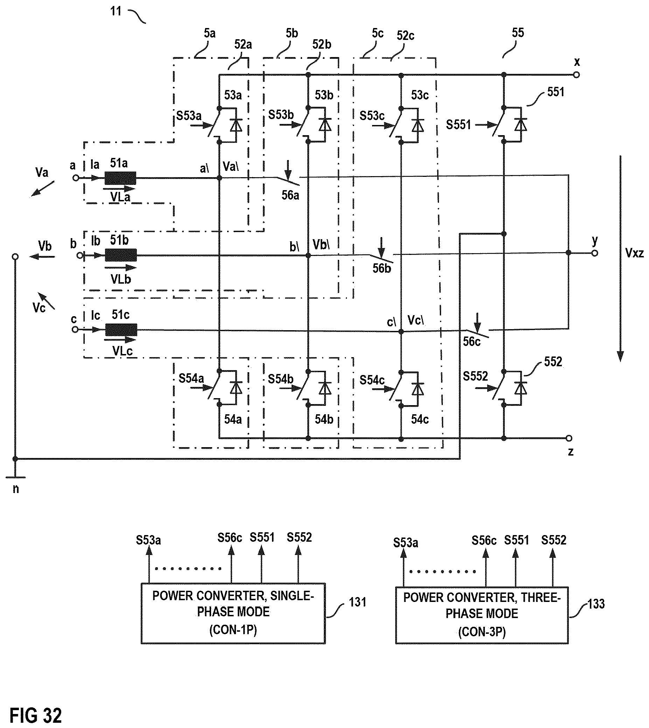

Figure 32 illustrates a modification of the PFC rectifier 11 according to Figure 25. The PFC rectifier 11 according to Figure 32 has a Vienna rectifier topology. Different from the PFC rectifier 11 with the totem pole topology according to Figure 25, the PFC rectifier 11 according to Figure 32 includes a midpoint y. Furthermore, each of the rectifier stages 5a, 5b, 5c, in addition to the first switch 53a, 53b, 53c and the second switch 54a, 54b, 54c includes a third electronic switch 56a, 56b, 56c connected between the respective switched node a\, b\, c\ and the midpoint y.

Referring to Figure 32, the first and third controllers 131, 133 control operation of each of the electronic switches 53a-56c in the rectifier stages 5a, 5b, 5c and the switches 551, 552 in the unfolding bridge 52.

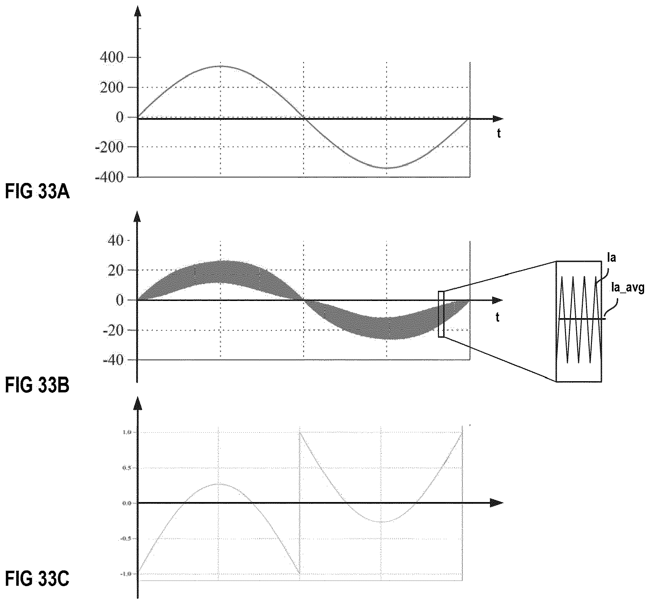

Figures 33A-33C shows signal diagrams that illustrate operation of the PFC rectifier 11 according to Figure 32 in the single-phase mode. The signal diagrams according to Figures 33A-33C correspond to the signal diagrams illustrated in Figures 26A-26C.

Operation of the PFC rectifier 11 according to Figure 32 in the single-phase mode corresponds to operation of the PFC rectifier 11 according to Figure 25 in the single-phase mode, which includes that the first controller 131 according to Figure 32, for controlling operation of the first switches 53a, 53b, 53c and the second switches 54a, 54b, 54c is implemented in the same way as the first controller 131 according to Figures 27 and 28A-28B. Additionally, the first controller 131 according to Figure 32 is configured to deactivate (switch off) the third switches 56a, 56b, 56c in the single-phase mode. Thus, in the single-phase mode, only the first and second switches of the rectifier stages 5a, 5b, 5c are operated in a switched-mode.

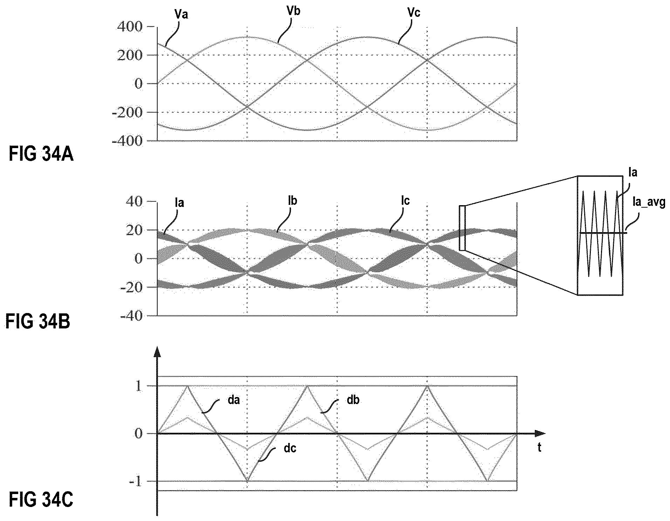

Figures 34A-34C show signal diagrams that illustrate operation of the PFC rectifier 11 according to Figure 32 in the three-phase mode. These signal diagrams correspond to the signal diagrams illustrated in Figures 29A-29C.

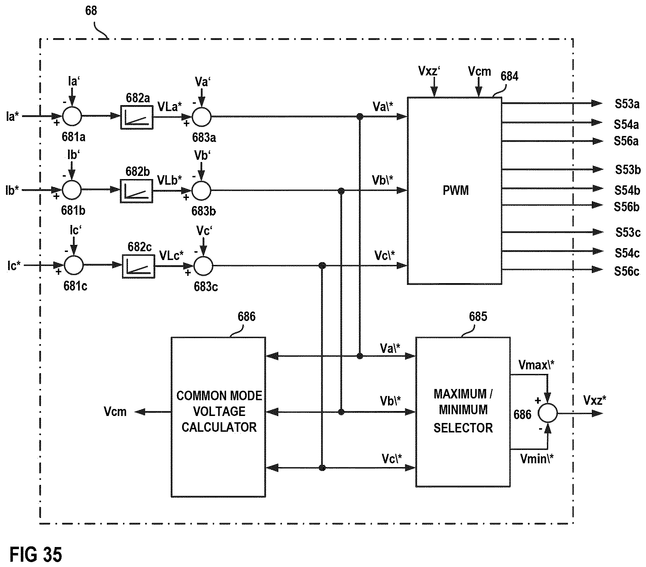

Operation of the PFC rectifier 11 according to Figure 32 in the three-phase mode is very similar to operation of the PFC rectifier 11 according to Figure 25 in the three-phase mode. This includes that the third controller 133 according to Figure 32 is very similar to the third controller 133 according to Figures 30 and 31A-31B. According to one example, in the third controller 133 according to Figure 32, the voltage controller 66 (not illustrated in Figures 32) is implemented in accordance with the example illustrated in Figure 31A. One example of the voltage controller 68 included in the third controller 133 according to Figure 32 is illustrated in Figures 35. The voltage controller 68 according to Figure 35 is based on the voltage controller 68 according to Figure 31B and has the same topology and includes the same functional blocks (functional units).

The voltage controller 68 according to Figures 35 is different from the voltage controller according to Figures 31B in that the PWM circuit 684, in addition to generating the control signals control signals S53a, S54a, S53b, S54b, S53c, S54c for controlling operation of the first and second switches 53a, 54a, 53b, 54b, 53c, 54c, generates drive signals S56a, S56b, S56c for controlling operation of the third switches 56a, 56b, 56c. The functionality of the PWM circuit 684 according to Figure 35 is different from the functionality of the PWM circuit 684 according to Figure 31B as briefly explained in the following.

For operating the PFC rectifier 11 of the type illustrated in Figure 32 in the three-phase mode, the PWM circuit according to Figures 35 is configured to calculate the duty cycles da, db, dc of the rectifier stages 5a, 5b, 5c in accordance with equations (7a)-(7c) hereinabove. In the PFC rectifier 11 according to Figures 32, different from the PFC rectifier 11 according to Figure 25, the magnitudes |da|, |db|, |dc| of the duty cycles da, db, dc, in each drive cycle, define the on-time duration of the respective third switch 56a, 56b, 56c. Thus, the PWM circuit 684 according to Figures 35 is configured to generate the drive signals S56a, S56b, S56c such that the on-time durations of the third switches 56a, 56b, 56c are in accordance with the magnitudes of the duty cycles da, db, dc. More specifically, the PWM circuit 684 adjusts the on-time durations as being given by the magnitude of the respective duty cycle multiplied with the duration of the duty cycle.

The first and second switches 53a, 53b, 53c, 54a, 54b, 54c may permanently be switched off in the three-phase mode, so that, in each rectifier stage 5a, 5b, 5c, the rectifier element of one of the first and second switches 53a, 53b, 53c, 54a, 54b, 54c takes over the respective inductor current Ia, Ib, Ic when the respective third switch 56a, 56b, 56c is in the off-state. In this example, the PWM circuit 684 according to Figures 34 only generates the third drive signals 56a, 56b, 56c.

Alternatively, in each of the rectifier stages 5a, 5b, 5c, one of the first and second switches 53a, 53b, 53c, 54a, 54b, 54c in each drive cycle is operated in a complementary fashion to the respective third switch 56a, 56b, 56c. According to one example, the respective first switch 53a, 53b, 53c is operated complementarily to the third switch 56a, 56b, 56c when the respective switched node voltage reference Va*, Vb*, Vc* is positive (which is when the respective duty cycle da, db, dc is positive), and the respective second switch 54a, 54b, 54c is operated complementarily to the third switch 56a, 56b, 56c when the respective switched node voltage reference Va*, Vb*, Vc* is negative (which is when the respective duty cycle da, db, dc is negative). In this example (and as illustrated in Figures 35) the PWM circuit 684 is configured to generate drive signals for each of the switches S54a-S56c in each of the rectifier stages 5a, 5b, 5c.

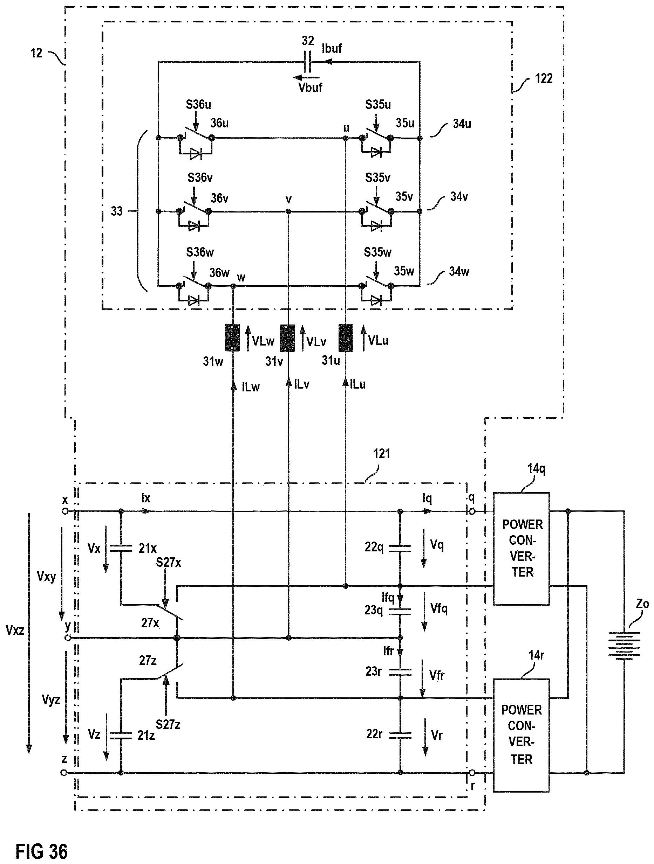

Figure 36 illustrates one example of a buffer circuit 12 that is configured to be connected to a 3-level PFC rectifier, such as the PFC rectifier 11 with the Vienna rectifier topology according to Figure 32. The buffer circuit 12 is connected to the output nodes x, z and the midpoint y of the PFC rectifier (not illustrated in Figure 36). Different from the buffer circuits 12 explained before, the buffer circuit 12 according to Figure 36 includes two input capacitors 21x, 21z and two output capacitors 22q, 22r. Furthermore, the buffer circuits 12 includes two control capacitors 23q, 23r.

Referring to Figure 36, a first capacitor series circuit including the first output capacitor 22q and the first control capacitor 23q are connected between the first output node q and the midpoint y, and a second capacitor series circuit including the second control capacitor 23r and the second output capacitor 22r is connected between the midpoint y and the second output node r. The first and second capacitor series circuits are connected between the first output node q and the second output node r such that the first and second control capacitors 23q, 23r are connected at the midpoint y. Referring to Figure 36 The first input node x (which is identical with the first output node of the PFC rectifier) is directly connected to the first output node q, and the second input node z (which is identical with the second output node of the PFC rectifier) is directly connected to the second output node r.

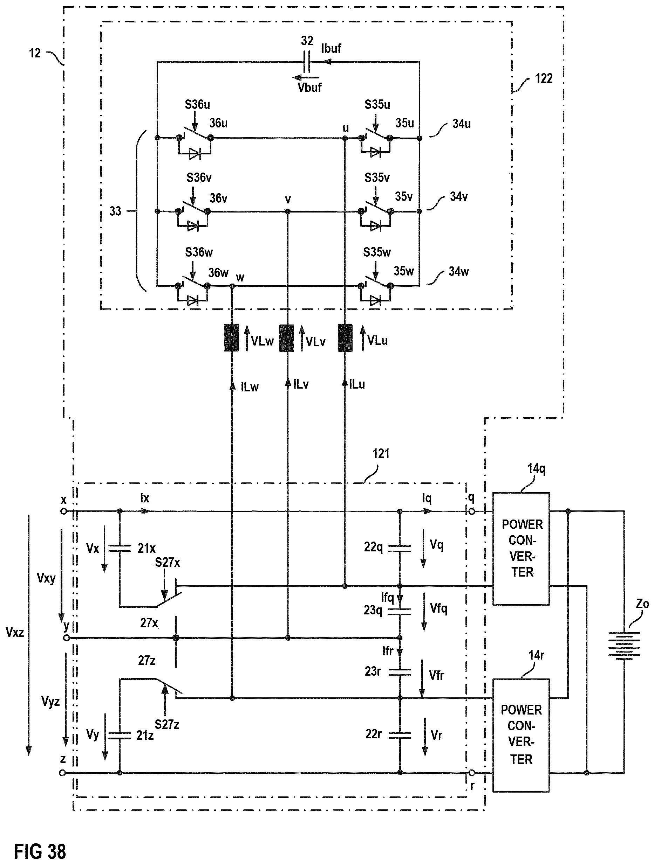

Furthermore, the buffer circuit 12 includes to switchover switches 27x, 27z. A first one 27x of these switches 27x, 27z is configured to connect the first input capacitor 21x either in parallel with the first output capacitor 22q, or in parallel with the first capacitor series circuit 22q, 23q. A second one 27z of these switches 27x, 27z is configured to connect the second input capacitor 21z either in parallel with the second output capacitor 22r or in parallel with the second capacitor series circuit 22r, 23r. The switchover switches 27x, 27z are controlled by the control circuit 13 such that in the single-phase mode the first and second input capacitors 21x, 21z are connected in parallel with the first and second capacitor series circuits, respectively. This is illustrated in Figure 36. In the three-phase mode, the control circuit 13 controls the switch over switches 27x, 27z such that the first and second input capacitors 21x, 21z are connected in parallel with the first and second output capacitors 22q, 22r, respective. This is illustrated in Figure 38 and explained further below.

Referring to Figure 36, the buffer circuit 12 further includes a voltage regulator 122 that is configured to regulate voltages Vfq, Vfr across the first and second control capacitors 23q, 23r. The voltage regulator 122 is similar to the voltage regulators 122 explained before and includes a buffer capacitor 32, a bridge circuit 33, and three inductors 31u, 31v, 31w. The bridge circuit 33 includes three half-bridges 34u, 34v, 34w that each include a first electronic switch 35u, 35v, 35w and a second electronic switch 36u, 36v, 36w connected in series with the first electronic switch 35u, 35v, 35w, wherein the series circuits are connected in parallel with the buffer capacitor 32. Each of the half-bridges 34u, 34v, 34w includes a switched node u, v, w that is connected to a respective one of the three inductors 31u, 31v, 31w.

The inductors 31u, 31v, 31w are connected to the control capacitors 23q, 23r, so that by suitably controlling inductor currents ILu, ILv, ILw through the inductors 31u, 31v, 31w currents Ifq, Ifr into the control capacitors 23q, 23r can be controlled in order to regulate the voltages Vfq, Vfr across the control capacitors 23q, 23r. More specifically, a first inductor 31u is connected between the switched node u of a first half-bridge 34u and the circuit node at which the first output capacitor 22q and the first control capacitor 23q are connected, a second capacitor 31v is connected between the switched node v of a second half bridge 34 v and the circuit node at which the first and second control capacitors 23q, 23r are connected, and a third inductor 31w is connected between the switched node w of a third half-bridge 34w and the circuit node at which the second control capacitor 23r and the second output capacitor 22r are connected. In this way, the current Ifq into the first control capacitor 23q is dependent on the currents ILu, ILv through the first and second inductors 31u, 31v (Ifq=ILv-ILu) and can be controlled by suitably controlling the currents ILu, ILv through the first and second inductors 31u, 31v. Furthermore, the current Ifr into the second control capacitor 23r is dependent on the currents ILv, ILw through the second and third inductors 31v, 31w (Ifr=ILw-ILv) and can be controlled by suitably controlling the currents ILv, ILw through the second and third inductors 31v, 31w. The current through each of the inductors 31u, 31v, 31w can be controlled by controlling the voltages at the respective switched nodes u, v, w in the way explained herein before.

It should be noted that in the buffer circuit 12 according to Figures 35 the second inductor 31v is optional. Basically, in a closed system, the sum of the three inductor currents ILu, ILv, ILw is zero,

$$ILu + ILv + ILw = 0 \qquad (9).$$

This means, that the same functionality that can be achieved by using the three inductors 31u, 31v, 31w and the three half-bridges 34u, 34v, 34w can also be achieved by using only the first and third inductor 31u, 31w and the corresponding half bridges 34u, 34w and by suitably adapting control of these half bridges 34u, 34w.

Referring to Figure 36, a first further power converter 14q may be connected to the first output capacitor 22q, and a second further power converter 14r may be connected to the second output capacitor 22r. Each of these further power converters 14q, 14r can be an isolated power converter. Outputs of the further power converters 14q, 14r can be connected in parallel to a load Zo, such as a battery.

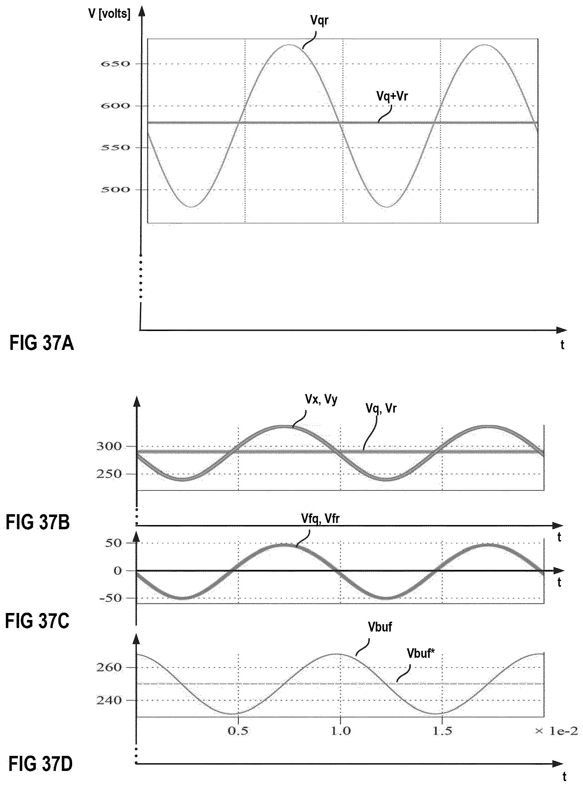

Figures 37A-37D show signal diagrams that illustrate operation of the buffer circuit 12 according to Figure 36 in the single-phase mode. More specifically, Figures 37A-37D shows signal diagrams of the voltage Vqr between the output nodes q, r, of the voltage Vq across the first output capacitor 22q plus the voltage Vr across the second output capacitor 22r, of the voltages Vx, Vz across the first and second input capacitors 21x, 21z, of the voltages Vfq, Vfr across the control capacitors 23q, 23r, and of the buffer voltage Vbuf.

Referring to the above, in the single-phase mode, the output voltage Vxz provided by the PFC rectifier 11 varies due to the varying input power. Consequently, the voltage Vqr between the output nodes q, r (which equals the output voltage Vxz) and the voltages Vx, Vz across the input capacitors 21x, 21z vary. The control capacitors 23q, 23r compensate for such variations. For this, referring to Figures 37B and 37C the voltages across the control capacitors 23q, 23r are regulated such that these voltages are alternating voltages with the same frequency and amplitude as the voltage ripples included in the input voltage Vxz. Consequently, the first and second output voltages Vq, Vr are essentially constant.

Referring to Figures 35, in the single-phase mode, the voltage Vx across the first input capacitor 21x equals the voltage Vxy between the first input node x and the midpoint y. Furthermore, the voltage Vz across the second input capacitor 21z equals the voltage Vyz between the midpoint y and the second input node z.

Figure 38 illustrates operation of the buffer circuit 12 according to Figure 36 in the three-phase node. Referring to the above, in the three-phase mode, the input capacitors 21x, 21z are connected in parallel with the output capacitors 22q, 22r. In this operating mode, the voltage Vxy between the first input node x and the midpoint y is regulated by regulating the voltage Vfq across the first control capacitor 23q, and the voltage Vyz between the midpoint y and the second input node z is regulated by regulating the voltage Vfr across the second control capacitor 23r.

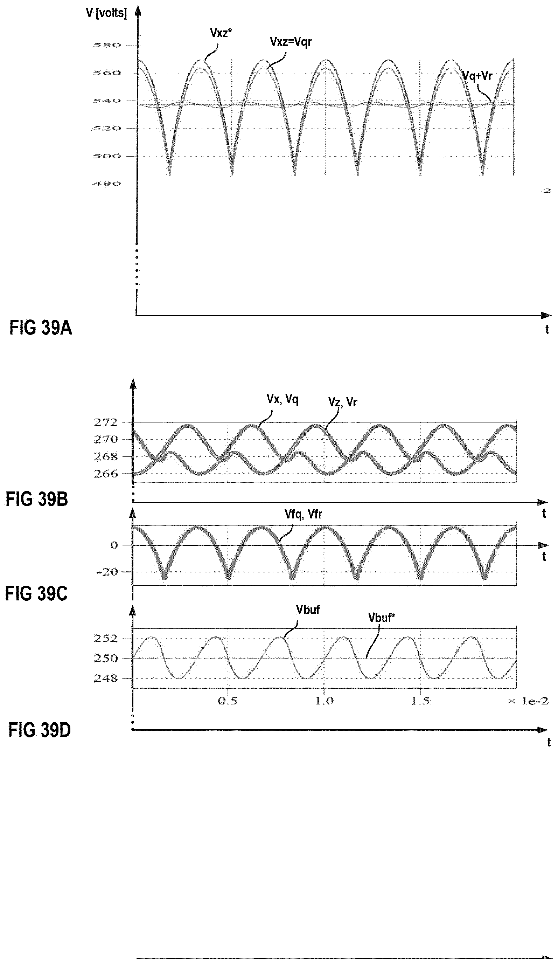

Figures 39A-39D show signal diagrams that illustrate operation of the buffer circuit 12 according to Figure 38 in the three-phase mode. More specifically, Figures 39A-39D show signal diagrams of the voltage Vqr between the output nodes q, r (which equals the voltage Vxz between the input nodes x, z), of the voltages Vq, Vx across the parallel circuit with the first input capacitor 21x and the first output capacitor 22q, of the voltages Vr, Vz across the parallel circuit with the second input capacitor 21z and the second output capacitor 22r, of the voltages Vfq, Vfr across the control capacitors 23q, 23r, and of the buffer voltage Vbuf.

As explained above, in the three-phase mode, the input power received by the PFC rectifier and, therefore, the power provided by the PFC rectifier to the buffer circuit 12 is devoid of large variations, so that the voltages Vq (=Vx) and Vr (=Vz) across the parallel circuits with the first input capacitor 21x and the first output capacitor 22q and the second input capacitor 21z and the second output capacitor 22r are essentially constant (as illustrated in Figures 39B). Thus, as can be seen from Figures 39A and 39C, by regulating the voltages Vfq, Vfr across the first and second control capacitors 23q, 23r the voltages Vxy, Vyz between the first input node x and the midpoint y and between the midpoint y and the second input node z and, therefore, the voltage Vxz between the output nodes x, z of the PFC rectifier 11 can be regulated to have the desired voltage waveform.

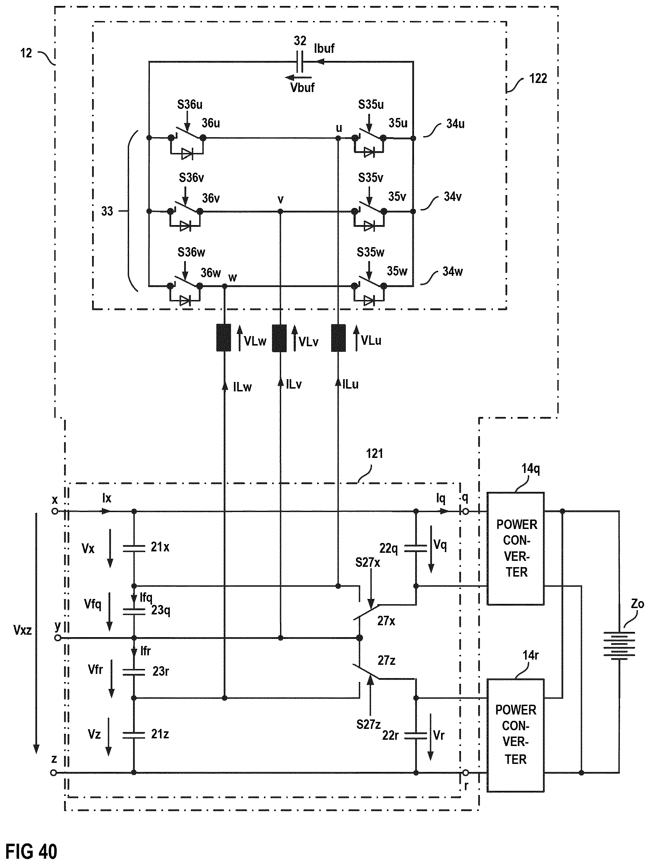

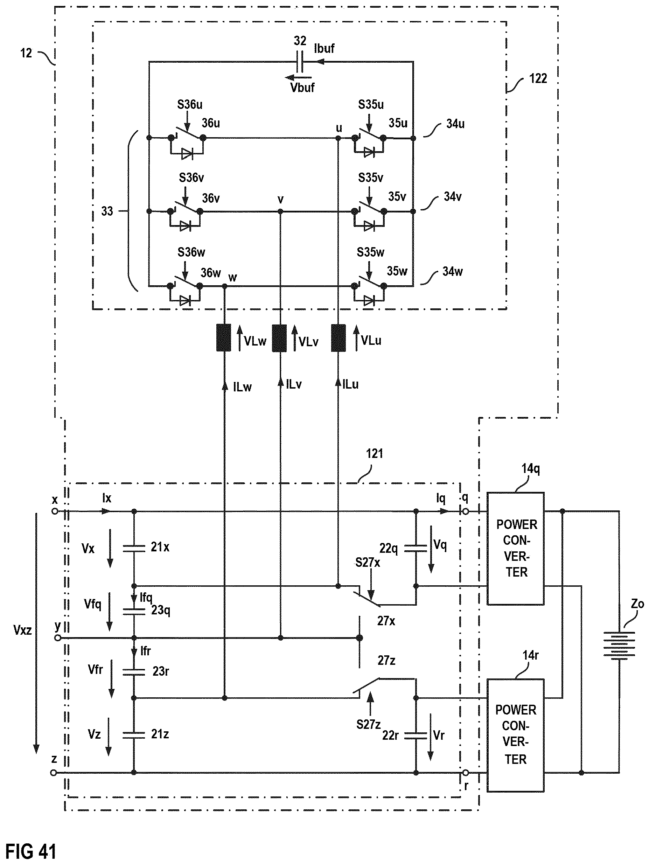

Figures 40 and 41 show a modification of the buffer circuit 12 according to Figure 36. The buffer circuit 12 according to Figure 40 is different from the buffer circuit 12 according to Figure 36 in that the first and second control capacitors 23q, 23r are connected between the first and second input capacitors 21x, 21z, wherein the first control capacitor 23q is connected between the first input capacitor 21x and the midpoint y and the second control capacitor 23r is connected between the midpoint y and the second input capacitor 21z.

The crossover switches 27x, 27z are controlled by the control circuit 13 (not illustrated in Figures 40 and 41). The first crossover switch 27x is configured to connect the first output capacitor 22q in parallel with the first input capacitor 21x or in parallel with a first capacitor series circuit including the first input capacitor 21x and the first control capacitor 23q. The second crossover switch 27z is configured to connect the second output capacitor 22r either parallel with the first input capacitor 21z or in parallel with a second capacitor series circuit including the second control capacitor 23r and the second input capacitor 21z.

Referring to Figure 40, In the single-phase mode, the control circuit 13 controls the crossover switches 27x, 27z, to connect the first output capacitor 22q in parallel with the first capacitor series circuit and to connect the second output capacitor 22r in parallel with the second capacitor series circuit. In this operating mode, the voltage across the first output capacitor 22q is regulated to be essentially constant by regulating the voltage Vfq across the first control capacitor 23q, and the voltage across the second output capacitor 22r is regulated to be essentially constant by regulating the voltage Vfr across the second control capacitor 23r. In the same way as explained with reference to Figure 36, the voltages across the first and second control capacitors 23q, 23r can be regulated by suitably controlling the inductor currents ILu, ILv, ILw.

Referring to Figure 41, in the three-phase mode, the control circuit 13 controls the crossover switches 27x, 27z to connect the first output capacitor 22q in parallel with the first input capacitor 21x and to connect the second output capacitor 22r in parallel with the first input capacitor 21z. In this operating mode, the voltage Vxz between the first and second input nodes x, z is regulated by regulating the voltages Vfr, Vfq across the control capacitors 23q, 23r.

Some of the aspects explained above are briefly summarized in the following with reference to numbered examples.

Example 1. A method including: selecting from operating a power converter arrangement in a single-phase mode or a three-phase mode, wherein the power converter arrangement includes: a power converter having three input nodes each configured to receive a respective input voltage, and an output; and a buffer circuit connected to the output of the power converter, wherein operating the power converter arrangement in the single phase mode includes: receiving the same input voltage at each of the three input nodes of the power converter; and operating the buffer circuit to regulate at least one output voltage of the buffer circuit, and wherein operating the power converter arrangement in the three-phase mode includes: operating the buffer circuit to regulate at least one output voltage at the output of the power converter such that the power converter is enabled to operate in a reduced switching mode; and operating the power converter in the reduced switching mode.

Example 2. The method according to claim 1, wherein the reduced switching mode is a 1/3 mode.

Example 3. The method of claim 1 or 2, wherein the buffer circuit includes a capacitor circuit with at least one control capacitor, and wherein to regulate the at least one output voltage of the buffer circuit in the single-phase mode and to regulate the output of the power converter in the three-phase mode includes to regulate a voltage across the at least one control capacitor.

Example 4. The method of claim 3, wherein the buffer circuit further includes: an input capacitor coupled between a first output node and a second output node of the power converter; and an output capacitor connected between a first output node and a second output node of the buffer circuit.

Example 5. The method of claim 4, wherein the control capacitor is connected between the first output node of the power converter and the first output node of the buffer circuit.

Example 6. The method of claim 5, wherein the method further includes: connecting a further capacitor in parallel with the input capacitor in the single-phase mode; and connecting the further capacitor in parallel with the output capacitor in the three-phase mode.

Example 7. The method of claim 4, wherein the control capacitor is connected in series with the input capacitor between the first output node and the second output node of the power converter.

Example 8. The method of claim 7, wherein the method further includes: in the single-phase mode, connecting the output capacitor in parallel with the series circuit including the input capacitor and the control capacitor, and in the three-phase mode, connecting the output capacitor in parallel with the input capacitor.

Example 9. The method of any one of claims 1 to 8, wherein the power converter is a 2-level PFC rectifier.

Example 10. The method of any one of claims 1 to 8, wherein the power converter is a 3-level PFC rectifier and includes a first output node, a second output node, and a midpoint.

Example 11. The method of claim 3, wherein the at least one control capacitor includes a first control capacitor coupled between the first output node and the midpoint and a second control capacitor coupled between the midpoint and the second output node, wherein the capacitor circuit further includes a first input capacitor connected to the first output node, a second input capacitor connected to the second output node, a first output capacitor, and a second output capacitor, and wherein the at least one output voltage includes a first output voltage across the first output capacitor and a second output voltage across the second output capacitor.

Example 12. The method of claim 11, wherein the buffer circuit further includes: a first capacitor series circuit including the first output capacitor and the first control capacitor connected in series between the first output node and the midpoint, a second capacitor series circuit including the second output capacitor and the second control capacitor connected in series between the midpoint and the second output node, wherein operating the power converter arrangement in the single-phase mode includes connecting the first input capacitor in parallel with the first capacitor series circuit and the second input capacitor in parallel with the second capacitor series circuit, and wherein operating the power converter arrangement in the three-phase mode includes connecting the first input capacitor in parallel with the first output capacitor and the second input capacitor in parallel with the second output capacitor.

Example 13. The method of claim 11, wherein the buffer circuit further includes: a first capacitor series circuit including the first input capacitor and the first control capacitor connected in series between the first output node and the midpoint, a second capacitor series circuit including the second input capacitor and the second control capacitor connected in series between the midpoint and the second output node, wherein operating the power converter arrangement in the single-phase mode includes connecting the first output capacitor in parallel with the first capacitor series circuit and the second output capacitor in parallel with the second capacitor series circuit, and wherein operating the power converter arrangement in the three-phase mode includes connecting the first input capacitor in parallel with the first output capacitor and the second input capacitor in parallel with the second output capacitor.

Example 14. The method of any one of the preceding claims, wherein the power converter includes three rectifier stages that are each configured to be operated in a switched mode, wherein operating the power converter in the reduced switching mode includes operating only one of the three rectifier stages in the switched node and operating the remainder of the rectifier stages statically in a predefined operating state.

Example 15. The method of claim 14, wherein operating only one of the three rectifier stages in the switched mode and operating the remainder of the rectifier stages statically includes operating the one of the three rectifier stages in the switched mode and operating the remainder of the rectifier stages statically for a plurality of successive drive cycles, wherein in each drive cycle and operating state of the one of the three rectifier stages changes at least once.

Example 16. A control circuit, configured to operate a power converter arrangement including a power converter and a buffer circuit in a single-phase mode or a three-phase mode, wherein to operate the power converter arrangement in the single-phase mode includes: to operate the buffer circuit to regulate at least one output voltage of the buffer circuit, and wherein operating the power converter arrangement in the three-phase mode includes: to operate the buffer circuit to regulate at least one output voltage at the output of the power converter such that the power converter is enabled to operate in a reduced switching mode; and to operate the power converter in the reduced switching mode.

Example 17. An executable program code including instructions which, when executed by a control circuit including a microcontroller, to cause the control circuit to carry out the method of any one of claims 1 to 15.

## Claims

**1.** A method comprising:

selecting from operating a power converter arrangement in a single-phase mode or a three-phase mode, wherein the power converter arrangement comprises:

a power converter (11) having three input nodes (a, b, c) each configured to receive a respective input voltage (Va, Vb, Vc), and an output (x, z); and
a buffer circuit (12) connected to the output (x, z) of the power converter (11),
wherein operating the power converter arrangement in the single phase mode comprises:

receiving the same input voltage (Vabc) at each of the three input nodes (a, b, c) of the power converter (11); and operating the buffer circuit (12) to regulate at least one output voltage (Vqr; Vq, Vr) of the buffer circuit (12), and wherein operating the power converter arrangement in the three-phase mode comprises:

operating the buffer circuit (12) to regulate at least one output voltage (Vxz; Vx, Vz) at the output (x, z) of the power converter (11) such that the power converter (11) is enabled to operate in a reduced switching mode; and
operating the power converter (11) in the reduced switching mode.

**2.** The method according to claim 1, wherein the reduced switching mode is a 1/3 mode.

**3.** The method of claim 1 or 2,

wherein the buffer circuit (12) comprises a capacitor circuit (121) with at least one control capacitor (23; 23q, 23r), and
wherein to regulate the at least one output voltage (Vqr; Vq, Vr) of the buffer circuit (12) in the single-phase mode and to regulate the output (x, z) of the power converter (11) in the three-phase mode comprises to regulate a voltage (Vf; Vfq, Vfr) across the at least one control capacitor (23; 23q, 23r).

**4.** The method of claim 3, wherein the buffer circuit (12) further comprises:

an input capacitor (21) coupled between a first output node (x) and a second output node (z) of the power converter (11); and
an output capacitor (22) connected between a first output node (q) and a second output node (r) of the buffer circuit (12).

**5.** The method of claim 4,
wherein the control capacitor (23) is connected between the first output node (x) of the power converter (11) and the first output node (q) of the buffer circuit (12).

**6.** The method of claim 5, wherein the method further comprises:

connecting a further capacitor (24) in parallel with the input capacitor (21) in the single-phase mode; and connecting the further capacitor (24) in parallel with the output capacitor (22) in the three-phase mode.

**7.** The method of claim 4,
wherein the control capacitor (23) is connected in series with the input capacitor (21) between the first output node (x) and the second output node (z) of the power converter.

**8.** The method of claim 7, wherein the method further comprises:

in the single-phase mode, connecting the output capacitor (22) in parallel with the series circuit including the input capacitor (21) and the control capacitor (23), and
in the three-phase mode, connecting the output capacitor (22) in parallel with the input capacitor (21).

**9.** The method of any one of claims 1 to 8,
wherein the power converter (11) is a 2-level PFC rectifier.

**10.** The method of any one of claims 1 to 8,
wherein the power converter (11) is a 3-level PFC rectifier and comprises a first output node (x), a second output node (z), and a midpoint (z).

**11.** The method of claim 3,

wherein the at least one control capacitor comprises a first control capacitor (23q) coupled between the first output node (x) and the midpoint (y) and a second control capacitor (23r) coupled between the midpoint (y) and the second output node (z),
wherein the capacitor circuit (121) further comprises a first input capacitor connected to the first output node (x), a second input capacitor connected to the second output node (z), a first output capacitor (22q), and a second output capacitor (22r), and
wherein the at least one output voltage comprises a first output voltage ()Vq) across the first output capacitor (22q) and a second output voltage (Vr) across the second output capacitor (22r).

**12.** The method of claim 11,
wherein the buffer circuit (12) further comprises:

a first capacitor series circuit including the first output capacitor (22q) and the first control capacitor (23q) connected in series between the first output node (x) and the midpoint (y),
a second capacitor series circuit including the second output capacitor (22r) and the second control capacitor (23r) connected in series between the midpoint (y) and the second output node (z),
wherein operating the power converter arrangement in the single-phase mode comprises connecting the first input capacitor (21x) in parallel with the first capacitor series circuit and the second input capacitor (21z) in parallel with the second capacitor series circuit, and
wherein operating the power converter arrangement in the three-phase mode comprises connecting the first input capacitor (21x) in parallel with the first output capacitor (22q) and the second input capacitor (21z) in parallel with the second output capacitor (22r).

**13.** The method of claim 11,
wherein the buffer circuit (12) further comprises:

a first capacitor series circuit including the first input capacitor (21x) and the first control capacitor (23q) connected in series between the first output node (x) and the midpoint (y),
a second capacitor series circuit including the second input capacitor (21z) and the second control capacitor (23r) connected in series between the midpoint (y) and the second output node (z),
wherein operating the power converter arrangement in the single-phase mode comprises connecting the first output capacitor (22q) in parallel with the first capacitor series circuit and the second output capacitor (22r) in parallel with the second capacitor series circuit, and
wherein operating the power converter arrangement in the three-phase mode comprises connecting the first input capacitor (21x) in parallel with the first output capacitor (22q) and the second input capacitor (21z) in parallel with the second output capacitor (22r).

**14.** A control circuit, configured to operate a power converter arrangement comprising a power converter and a buffer circuit in a single-phase mode or a three-phase mode,
wherein to operate the power converter arrangement in the single-phase mode comprises:

to operate the buffer circuit (12) to regulate at least one output voltage (Vqr; Vq, Vr) of the buffer circuit (12), and wherein operating the power converter arrangement in the three-phase mode comprises:

to operate the buffer circuit (12) to regulate at least one output voltage (Vxz) at the output (x, z) of the power converter (11) such that the power converter (11) is enabled to operate in a reduced switching mode; and to operate the power converter (11) in the reduced switching mode.

**15.** An executable program code comprising instructions which, when executed by a control circuit comprising a microcontroller, to cause the control circuit to carry out the method of any one of claims 1 to 13.

11
12
Ia
Ix
x
Iq
q
Va
a
Vab
Vb
b
Ib
POWER
CONVER-
TER
Vxz
BUFFER
CIRCUIT
Vqr
Zo
Vc
Vbc
Vca
Ic
c
z
r
n
13
CONTROLLER

FIG 1

11
12
14
Ia
Ix
x
Iq
q
Izo
Zo
Va
a
Vab
Vb
b
Ib
POWER
CONVER-
TER
Vxz
BUFFER
CIRCUIT
Vqr
POWER
CONVER-
TER
Vzo
Vc
Vbc
Vca
Ic
c
z
r
n
13
15
CONTROLLER
CONTROLLER

FIG 2

SINGLE PHASE (1-Φ) OPERATION
V [volts]
400
200
0
-200
-400
Vabc= Va=Vb=Vc
t

FIG 3

Pin
Pin
Pin_avg
0
t

FIG 4

V [volts]
THREE PHASE (3-Φ) OPERATION
600V
400V
200V
-200V
-400V
Vll
Va
Vb
Vc
t1
t2

FIG 5

Pin
0
t

FIG 6

100
110
SINGLE-PHASE MODE
111
RECEIVING THE SAME INPUT VOLTAGE AT EACH OF THE THREE INPUT NODES OF THE POWER CONVERTER
112
OPERATING THE BUFFER CIRCUIT TO REGULATE AN OUTPUT VOLTAGE OF THE BUFFER CIRCUIT
120
THREE-PHASE MODE
121
RECEIVING DIFFERENT INPUT VOLTAGES AT THE THREE INPUT NODES OF THE POWER CONVERTER
AND
OPERATING THE POWER CONVERTER IN A REDUCED SWITCHING MODE
122
OPERATING THE BUFFER CIRCUIT TO REGULATE AN OUTPUT VOLTAGE OF THE POWER CONVERTER

FIG 7

13
POWER CONVERTER, SINGLE-PHASE MODE (CON-1P)
131
POWER CONVERTER, THREE-PHASE MODE (CON-3P)
133
BUFFER CIRCUIT, SINGLE-PHASE MODE (BUF-1P)
132
BUFFER CIRCUIT, THREE-PHASE MODE (BUF-3P)
134

FIG 8

12
122
32
Ibuf
Vbuf
S36t
S35t
36t
t
35t
34t
33
S35t
Vst
S35s
36s
35s
34s
s
31
VL
V61
IL
IL
121
x
Ix
Vf
If
Iq
q
23
25
S25
Vxz
Vd
=Vxz
21
24
22
Vqr
z
r

FIG 9

V [volts]
Vxz
Vqr
620
600
580
560
540
0
t
FIG 10A
Vf
50
0
-50
t
FIG 10B
Vbuf
Vbuf_avg
100
95
90
85
0
t
FIG 10C

132
(BUF-1P)
VOLTAGE
CONTROLLER
41
If*
CURRENT
CONTROLLER
43
S35s
S36s
S35t
S36t

FIG 11

41
-Vxz'
-Vd'
413
412
Vf1*
411
Vf*
419
420
If*
Vf'
414
416
Ibuf*
417
Vf2*
Vbuf*
415
Vbuf'
418
Vbuf*
-Iq'

FIG 12A

43
Ubuf'
434
431
435
432
433
If*
IL*
VL*
Vst*
PWM
S35s
S36s
S35t
S36t
Ix'
IL'
Vf'

FIG 12B

V [volts]
Vxz*
Vxz
560
540
520
500
Vqr
Vqr*
t

FIG 13A

V [volts]
Vf
40
20
0
-20
t

FIG 13B

V [volts]
Vbuf
100
Vbuf*
90
80
t

FIG 13C

134
(BUF-3P)
VOLTAGE CONTROLLER 45
If*
CURRENT CONTROLLER 47
S35s
S36s
S35t
S36t

FIG 14

45
461
453
Vf1*
451
Vf*
459
460
If*
Vxz*
Vqr'
452
Vf'
454
456
Ibuf*
457
Vf2*
Vbuf*
455
Vbuf'
458
Vbuf*
-Iq'

FIG 15

12
32
Ibuf
Vbuf
122
S36t
S35t
36t
t
35t
34t
33
Vst
S35t
S35s
36s
35s
34s
s
31
VL
IL
IL
Iqr
121
x
Ix
Iq
q
If
Vf
23
Iqr
Vxz
22
Vqr
Vd
21
z
r

FIG 16

V [volts]
620
600
580
560
540
Vd
Vqr
Vqr*
t

FIG 17A

Vf
50
0
-50
t

FIG 17B

Vbuf
252
250
248
t

FIG 17C

132
(BUF-1P)
VOLTAGE CONTROLLER 41
If*
If_buf*
CURRENT CONTROLLER 43
S35s
S36s
S35t
S36t

FIG 18

41
Vqr*
421
413
412
Vd'
Vf*
419
420
If*
Vf'
Vbuf*
414
416
Ibuf*
422
Pbuf*
423
425
If_buf*
415
Vbuf'
RMS
424
Vf'

FIG 19A

43
Iq'
If*
Ix'
436
437
438
IL*
435
432
VL*
433
Vst*
Vbuf'
434
PWM
S35s
S36s
S35t
S36t
If_buf*
IL'
Vf'

FIG 19B

V [volts]
560
540
520
500
Vxz
Vxz*
Vd
t

FIG 20A

Vf
0
-50
t

FIG 20B

Vbuf
Vbuf*
250.2
250.0
249.8
249.6
249.4
t

FIG 20C

134
(BUF-3P)
VOLTAGE
CONTROLLER
45
If*
If_buf*
CURRENT
CONTROLLER
47
S35s
S36s
S35t
S36t

FIG 21

45
461
453
Vqr*
Vd'
452
Vf*
459
460
If*
Vf'
Vbuf*
Vf'
454
456
Ibuf*
Pbuf*
463
Vbuf*
462
465
If_buf*
455
RMS
464
Vbuf'
Vf'

FIG 22

12
122
32
Ibuf
Vbuf
S36t
36t
S35t
35t
t
34t
33
S35t
Vst
S35s
36s
35s
34s
s
31
VL
IL
IL
Iqr
121
x
Ix
Iq
q
If
Vf
23
S26
Vxz
Vqr
26
Vd
Iqr
21
22
z
r

FIG 23

11
5a
x
52a
a
Ia
51a
a\
Va
VLa
5b
52b
Vb
b
Ib
51b
b\
Vxz
VLb
5c
n
52c
Vc
c
Ic
51c
c\
VLc
z

FIG 24

11
5a
52a
5b
52b
5c
52c
55
x
53a
53b
53c
551
S53a
S53b
S53c
S551
a
Ia
51a
a\
Va\
Va
VLa
Vb
b
Ib
51b
b\
Vb\
VLb
Vxz
Vc
c
Ic
51c
c\
Vc\
VLc
552
S54a
S54b
S54c
S552
54a
54b
54c
z
n
S53a
S54c
S551
S552
POWER CONVERTER, SINGLE-PHASE MODE (CON-1P)
131
S53a
S54c
S551
S552
POWER CONVERTER, THREE-PHASE MODE (CON-3P)
133

FIG 25

400
200
0
-200
-400
Va
t
FIG 26A
40
20
0
-20
-40
Ia
t
Ia
Ia_avg
FIG 26B
da
1.0
0.5
0.0
-0.5
-1.0
FIG 26C

131
(CON-1P)
VOLTAGE
CONTROLLER
61
Ia*
Ib*
Ic*
CURRENT
CONTROLLER
63
S53a
S53b
S53a
S53b
S53a
S53b
UNFOLDING CONTROLLER
65
S551
S552

FIG 27

61
Vqr*
611
612
Iqr*
613
Vqr'
Pin*
615
G*
614
Vqr'
Iq'
3/2 V²
Va'
616a
Ia*
Vb'
616b
Ib*
Vc'
616c
Ic*

FIG 28A

63
Vxz'
634
Ia'
Ia*
631a
632a
VLa*
Va'
633a
Va*
Ib'
Ib*
631b
632b
VLb*
Vb'
633a
Vb*
Ic'
Ic*
631c
632c
VLc*
Vc'
633c
Vc*
PWM
S53a
S54a
S53b
S4b
S53c
S54c

FIG 28B

Va
Vb
Vc
400
200
0
-200
-400
FIG 29A
Ia
Ib
Ic
Ia
Ia_avg
40
20
0
-20
-40
FIG 29B
1
0
-1
da
db
dc
t
FIG 29C

133
(CON-3P)
VOLTAGE
CONTROLLER
66
Ia*
Ib*
Ic*
CURRENT
CONTROLLER
68
S53a
S54a
S53b
S54b
S53c
S54c
Vxz*
UNFOLDING CONTROLLER
70
S551
S552

FIG 30

66
Vqr*
661
662
Iqr*
663
Vqr'
P*
665
G*
664
Vqr'
Iq'
3/2 V²
Va'
666a
Ia*
Vb'
666b
Ib*
Vc'
666c
Ic*

FIG 31A

68
Ia*
Ia'
681a
682a
VLa*
Va'
683a
Ib*
Ib'
681b
682b
VLb*
Vb'
683b
Ic*
Ic'
681c
682c
VLc*
Vc'
683c
Va*
Vb*
Vc*
Vxz'
Vcm
684
PWM
S53a
S54a
S56a
S53b
S54b
S56b
S53c
S54c
S56c
686
COMMON MODE VOLTAGE CALCULATOR
Vcm
685
MAXIMUM / MINIMUM SELECTOR
Vmax*
686
Vxz*
Vmin*

FIG 31B

11
5a
52a
5b
52b
5c
52c
55
x
53a
53b
53c
551
S53a
S53b
S53c
S551
Va
a
Ia
51a
a\
Va\
VLa
56a
Vb
b
Ib
51b
b\
Vb\
y
Vxz
VLb
56b
Vc
c
Ic
51c
c\
Vc\
VLc
56c
S54a
S54b
S54c
S552
552
54a
54b
54c
z
n
S53a
S56c
S551
S552
POWER CONVERTER, SINGLE-PHASE MODE (CON-1P)
131
S53a
S56c
S551
S552
POWER CONVERTER, THREE-PHASE MODE (CON-3P)
133

FIG 32

400
200
0
-200
-400
t
FIG 33A
40
20
0
-20
-40
t
Ia
Ia_avg
FIG 33B
1.0
0.5
0.0
-0.5
-1.0
FIG 33C

Va
Vb
Vc
400
200
0
-200
-400
FIG 34A
Ia
Ib
Ic
Ia
Ia_avg
40
20
0
-20
-40
FIG 34B
1
0
-1
da
db
dc
t
FIG 34C

68
Ia'
682a
VLa*
Va'
Va*
Vxz'
Vcm
684
Ia*
681a
683a
Ib'
682b
VLb*
Vb'
Vb*
PWM
Ib*
681b
683b
Ic'
682c
VLc*
Vc'
Vc*
Ic*
681c
683c
S53a
S54a
S56a
S53b
S54b
S56b
S53c
S54c
S56c
686
685
Va*
Vmax*
COMMON MODE
VOLTAGE
CALCULATOR
Vcm
Vb*
MAXIMUM /
MINIMUM
SELECTOR
686
Vxz*
Vc*
Vmin*


FIG 35

12
122
32
Ibuf
Vbuf
S36u
36u
u
S35u
35u
34u
S36v
36v
v
S35v
35v
34v
33
S36w
36w
w
S35w
35w
34w
VLw
VLv
VLu
31w
31v
31u
ILw
ILv
ILu
121
14q
x
Ix
Iq
q
POWER
CON-
VER-
TER
Vx
21x
S27x
22q
Vq
Vxy
Ifq
23q
Vfq
Zo
27x
Vxz
y
Ifr
27z
23r
Vfr
14r
Vyz
POWER
CON-
VER-
TER
S27z
Vz
21z
22r
Vr
z
r

FIG 36

V [volts]
Vqr
Vq+Vr
650
600
550
500
t

FIG 37A

Vx, Vy
Vq, Vr
300
250
t
Vfq, Vfr
50
0
-50
t
Vbuf
Vbuf*
260
240
0.5
1.0
1.5
× 1e-2
t

FIG 37B

FIG 37C

FIG 37D

12
122
121
32
Ibuf
Vbuf
S36u
36u
S35u
35u
u
34u
S36v
36v
v
S35v
35v
34v
33
S36w
36w
w
S35w
35w
34w
VLw
VLv
VLu
ILw
ILv
ILu
14q
x
Ix
Iq
q
POWER CON-VER-TER
Vx
21x
22q
Vq
S27x
Vxy
Ifq
23q
Vfq
Zo
Vxz
y
27x
Ifr
27z
23r
Vfr
14r
Vyz
POWER CON-VER-TER
Vy
21z
S27z
22r
Vr
z
r

FIG 38

V [volts]
580
560
540
520
500
480
Vxz*
Vxz=Vqr
Vq+Vr
-2
t

FIG 39A

Vx, Vq
Vz, Vr
272
270
268
266
t
Vfq, Vfr
0
-20
t
Vbuf
Vbuf*
252
250
248
0.5
1.0
1.5
× 1e-2
t

FIG 39B

FIG 39C

FIG 39D

12
122
121
32
Ibuf
Vbuf
S36u
36u
S35u
35u
u
34u
S36v
36v
v
S35v
35v
34v
33
S36w
36w
w
S35w
35w
34w
VLw
VLv
VLu
ILw
ILv
ILu
x
Ix
Iq
q
Vx
21x
22q
Vq
S27x
Vfq
Ifq
23q
27x
Vxz
y
Ifr
Vfr
23r
27z
S27z
Vz
21z
22r
Vr
z
r
14q
POWER CON-VER-TER
14r
POWER CON-VER-TER
Zo

FIG 40

12
122
32
Ibuf
Vbuf
S36u
36u
S35u
35u
u
34u
S36v
36v
v
S35v
35v
34v
33
S36w
36w
w
S35w
35w
34w
VLw
VLv
VLu
ILw
ILv
ILu
121
14q
x
Ix
Iq
q
Vx
21x
22q
Vq
S27x
POWER
CON-
VER-
TER
Vfq
Ifq
23q
27x
Zo
Vxz
y
Ifr
27z
14r
Vfr
23r
POWER
CON-
VER-
TER
S27z
Vz
21z
22r
Vr
z
r

FIG 41

Europäisches
Patentamt
European
Patent Office
Office européen
des brevets

# EUROPEAN SEARCH REPORT

Application Number
EP 23 16 2758

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/021293 A1 (ESMORIS BERTOA ANTON [ES] ET AL) 20 January 2022 (2022-01-20) * paragraph [0029] - paragraph [0039] * * figures 2,3 * | 1-15 | INV. H02M1/00 H02M1/10 H02M1/42 H02M3/158 H02M1/14 H02M1/15 ADD. H02M7/487 |
| Y | MENZI DAVID ET AL: "Three-Phase Two-Phase-Clamped Boost-Buck Unity Power Factor Rectifier Employing Novel Variable DC Link Voltage Input Current Control", 2018 IEEE INTERNATIONAL POWER ELECTRONICS AND APPLICATION CONFERENCE AND EXPOSITION (PEAC), IEEE, 4 November 2018 (2018-11-04), pages 1-8, XP033477061, DOI: 10.1109/PEAC.2018.8590599 [retrieved on 2018-12-26] | 1-9,14, 15 | |
| A | * the whole document * | 10-13 | |
| Y | EP 3 142 237 A1 (SCHNEIDER ELECTRIC IT CORP [US]) 15 March 2017 (2017-03-15) * figures 4,5 * | 3-6 | TECHNICAL FIELDS SEARCHED (IPC) |
| Y | US 2016/301387 A1 (WANG MIAO-XIN [FR] ET AL) 13 October 2016 (2016-10-13) * figure 4 * | 3,4,7, 11-13 | H02M |
| Y | HARASIMCZUK MICHAL ET AL: "Battery Charging System with Three-level ANPC Converter Operating at Variable Bipolar DC-link", IECON 2021 - 47TH ANNUAL CONFERENCE OF THE IEEE INDUSTRIAL ELECTRONICS SOCIETY, IEEE, 13 October 2021 (2021-10-13), pages 1-6, XP034014852, DOI: 10.1109/IECON48115.2021.9589366 [retrieved on 2021-10-26] * the whole document * | 10-13 | |

The present search report has been drawn up for all claims

1

| Place of search | Date of completion of the search | Examiner |
|---|---|---|
| The Hague | 31 August 2023 | Lochhead, Steven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 16 2758

This annex lists the patent family members relating to the patent documents cited in the above-mentioned European search report. The members are as contained in the European Patent Office EDP file on
The European Patent Office is in no way liable for these particulars which are merely given for the purpose of information.

31-08-2023

| Patent document cited in search report | Publication date | Patent family member(s) | Publication date |
|---|---|---|---|
| US 2022021293 A1 | 20-01-2022 | BR 112021004046 A2 | 25-05-2021 |
| | | CN 112771771 A | 07-05-2021 |
| | | EP 3648322 A1 | 06-05-2020 |
| | | EP 3874587 A1 | 08-09-2021 |
| | | JP 2022503713 A | 12-01-2022 |
| | | US 2022021293 A1 | 20-01-2022 |
| | | WO 2020088945 A1 | 07-05-2020 |
| EP 3142237 A1 | 15-03-2017 | CN 106130329 A | 16-11-2016 |
| | | EP 3142237 A1 | 15-03-2017 |
| | | US 2016329805 A1 | 10-11-2016 |
| US 2016301387 A1 | 13-10-2016 | CN 106059272 A | 26-10-2016 |
| | | EP 3079258 A1 | 12-10-2016 |
| | | ES 2673613 T3 | 25-06-2018 |
| | | FR 3034929 A1 | 14-10-2016 |
| | | US 2016301387 A1 | 13-10-2016 |

EPO FORM P0459

For more details about this annex : see Official Journal of the European Patent Office, No. 12/82